# EUROPEAN PATENT SPECIFICATION

(11) **EP 4 674 749 B1**
(45) Date of publication and mention of the grant of the patent: **07.10.2026**
(21) Application number: 25182287.0
(22) Date of filing: 12.06.2025
(51) Int. Cl.: B64C 25/36, B64C 25/42, B60T 5/00, B64D 13/06, B64C 25/10

(54) **BRAKE COOLING SYSTEM**
BREMSKÜHLSYSTEM
SYSTÈME DE REFROIDISSEMENT DE FREIN

(30) Priority: 05.07.2024 US 202418764676
(43) Date of publication of application: 07.01.2026
(73) Proprietor: Honeywell International Inc., Charlotte, NC 28202 (US)
(72) Inventor: ZHENG, Zhanjun, Charlotte 28202 (US); ZOU, Yunfei, Charlotte 28202 (US); DENG, Fangmin, Charlotte 28202 (US); REN, Jie, Charlotte 28202 (US); XU, Jin, Charlotte 28202 (US)
(74) Representative: Haseltine Lake Kempner LLP

(56) References cited:
- EP-A1- 4 382 312
- EP-B1- 3 995 368
- FR-A1- 2 749 559
- US-A1- 2014 239 121
- US-A1- 2019 112 037

## Description

### TECHNICAL FIELD

The present disclosure relates to cooling systems, such as cooling systems onboard an aircraft.

### BACKGROUND

Vehicles, such as aircraft, may include an environmental control system (ECS). The ECS may supply a vehicle with air and may provide climate control (e.g., temperature and pressure) within one or more compartments of the vehicle. In the case of an aircraft, the ECS may receive an air flow from one or more aircraft engines, an auxiliary power unit (APU), or a ground cart and condition the air flow prior to providing the air flow to the compartment. In examples, the ECS cools the air flow and provides for recirculation among the compartments of the vehicle. In some examples, the ECS may provide pressurization to the aircraft interior for the comfort and/or safety of passengers and crew.

EP 4382312 A1 discloses a cooling system that is configured to merge a first gas stream and a second gas stream to produce a mixed gas stream and provide the mixed gas stream to cool a brake assembly of a wheel.

### SUMMARY

The present invention is defined by the independent claims, to which reference should now be made. Advantageous embodiments are set out in the dependent claims.

The conduit may be configured to deliver the cooled air flow to the brake system when the landing gear assembly is in a lowered configuration, when the landing gear assembly is in a raised configuration, and/or when the landing gear assembly transitions between the lowered configuration and the raised configuration. Hence, the cooling devices and systems described herein may avoid delays that might otherwise occur when cooling of the brake system requires set up of a ground-based system. Further, the cooling devices and systems may provide cooling to the brake system following a take-off of the aircraft (e.g., when the ground-based system is unavailable).

In some examples, the assembly includes a valve configured to control a flow rate of the cooled air flow through the conduit and control circuitry configured to control the valve. The system may include a user input device operable by a crew member (e.g., a pilot) of the vehicle. In response to receiving user input via the user input device, the control circuitry can control (e.g., open, shut, or some state between open and shut) the valve, such that cooling of the components of the brake system may be commenced, ceased, or otherwise controlled.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a schematic illustration of a portion of an example vehicle including an example air conditioning pack configured to deliver a cooled air flow to one or more compartments of the vehicle.
FIG. 2 is a schematic illustration of an example conduit attached to a strut of a landing gear assembly and configured to deliver a portion of a cooled air flow to a brake system supported by the landing gear assembly.
FIG. 3 is a schematic illustration of an example conduit configured to deliver a cooled air flow to a volume defined at least in part by an example brake system supported by a landing gear assembly, with portions of the brake system and wheel illustrated as cross-sections with a cutting plane taken parallel to the page.
FIG. 4 is a schematic illustration of an example air conditioning pack configured to provide the cooled air flow to the one or more compartments of the vehicle.
FIG. 5 is a perspective view illustrating an example wheel including a plurality of rotor drive keys on an interior surface of the wheel.
FIG. 6 is a flow diagram illustrating an example method of providing a cooled air flow to a brake system of a vehicle.

### DETAILED DESCRIPTION

The present disclosure describes devices and systems (also referred to herein as "cooling devices," "cooling systems," or assemblies) configured to provide a cooled air flow to a brake system of a vehicle, such as an aircraft. The brake system is configured to decelerate a wheel configured to rotate about a wheel axis, which may cause one or more components of the brake system to increase in temperature (e.g., due to the dissipation of energy). For example, in some examples, the brake system includes a disc stack which includes one or more rotor discs interleaved with one or more stator discs. The rotor discs may be rotationally coupled with the wheel, such that a rotation of the wheel around the wheel axis causes rotation of the rotor discs around the wheel axis. The stator discs may be configured to engage one or more splines supported by a torque tube of the brake system, such that the stator discs remain substantially stationary relative to the wheel and the rotor discs. The brake system is configured to compress the disc stack (e.g., using an actuator) to cause engagement of friction surfaces on the rotating rotor discs and the stationary stator discs, reducing a rotational speed of the rotor discs around the wheel axis. The rotor discs are configured to engage the wheel, such that the reduction in the rotational speed of the rotor discs causes a reduction in the speed of the wheel.

Engaging the friction surfaces of the rotating rotor discs and stationary stator discs may cause an increase in temperature of the rotor discs, the stator discs, or other components of the brake system. The increase in temperature can act to accelerate oxidations of the rotor discs, stator discs, and/or other components of the brake system (e.g., when exposed to an air environment), reducing operational life. In some cases (e.g., following an aircraft landing and/or takeoff), it may be desirable to supply a cooling fluid to the disc stack or other portions of the brake system to reduce the temperature more quickly (e.g., to mitigate the oxidations and/or other impacts of the high temperature). Some wheel and brake assemblies require an integrated brake cooling fan installed on a main wheel, others require a separate cooling system (e.g., a system separate from an aircraft) to be set up and operated by a ground crew, in order to generally direct a flow of a cooling fluid over the brake system. The necessity for set up and subsequent operation of the separate cooling system by ground crew personnel may contribute to tarmac delays, negatively impacting the ability of an aircraft to accomplish a desired flight schedule and negatively impacting the efficiency of airport operations.

The cooling devices and systems disclosed herein are configured to receive a cooled air flow from a system onboard the vehicle (e.g., an air conditioning pack) and provide the cooled air flow to the brake system using a conduit onboard the vehicle. Hence, the cooling devices and systems may provide cooling to the brake system without strict reliance on an additional ground-based system requiring installation by a ground crew. For example, following and/or during a landing of an aircraft, the cooling system and devices (e.g., the conduit) may provide the cooled air flow to limit and/or mitigate the temperature rise of one or more brake system components (e.g., one or more stator discs or rotor discs). This may avoid delays that might otherwise occur when cooling of the brake system components strictly requires a integrated brake cooling fan system or ground-based system (e.g., a ground air conditioning system and/or another ground air supply system) that requires set up and operation by the ground crew. Thus, the cooling devices and systems described herein may mitigate or eliminate delays associated with the ground based system, reducing potential tarmac delays and negative impacts to the flight schedule of the aircraft.

Further, with the cooling system and devices configured to receive the cooled air flow from a system onboard the vehicle, the cooling system and devices may provide cooling to the brake system following a take-off of the aircraft (e.g., to dissipate heat generated by the brake system during taxi and/or take-off). This may reduce the time that the brake system components are exposed to higher temperatures, prolonging an operational life of the brake system components (e.g., one or more stator discs or rotor discs). In examples, the cooling system and devices (e.g., the conduit) is configured to remain fluidly coupled to the brake system as a landing gear assembly supporting the brake system is translated (e.g., as the landing gear assembly is raised and/or lowered), such that the cooling system and devices require minimal or no set-up to provide cooling to the brake system when desired (e.g., following an aircraft landing and/or take-off).

In some examples, the cooling system and devices includes a valve configured to control the flow of the cooled air flow through the conduit to the brake system, such that cooling of the brake system components may be commenced, ceased, or otherwise controlled based on the state of the valve. The cooling system and devices may include control circuitry configured to control the valve (e.g., control a position of the valve to control a state of the valve). In some examples, the control circuitry is configured to control the valve based on one or more indications, such as a temperature indication, provided by sensor of the vehicle. In some examples, the system may include a user input device configured to cause the control circuitry to control the valve (e.g., to cause the valve to open, shut, or alter its position). The user input device (e.g., a switch) may be operable by, for example, a crew member (e.g., a pilot), such that the crew member may control the cooling provided to the brake system. Hence, the cooling system and devices may be configured to allow an crew member and/or control circuitry to control (e.g., initiate, alter, or cease) cooling of the brake system without strict reliance on a ground crew to set-up and operate a separate cooling system.

The conduit may be configured to receive the cooled air flow either directly or indirectly from an environmental control system (ECS) of an aircraft. The ECS may include one or more air conditioning packs configured to produce the cooled air flow. In examples, the conduit is configured to deliver the cooled air flow when the brake system is positioned within a cavity (e.g., a wheel well) of a wheel of the aircraft. For example, the conduit may be configured to discharge the cooled air flow substantially into a volume defined at least partially by the brake system and/or a component of the wheel, such as a volume defined between a heat shield of the wheel and a disc stack of the brake system, a volume defined by a torque tube of the brake system, and/or another volume defined by the brake system and/or a component of the wheel.

The conduit may be configured to remain fluidically coupled to the volume as the brake system is moved relative to some portion of the vehicle. For example, when the brake system is supported (e.g., within the cavity) by a landing gear assembly of an aircraft, the brake system may be configured to position in a first position relative to a fuselage of the aircraft (e.g., when the landing gear assembly is in a lowered configuration), position in a second position relative to the fuselage (e.g., when the landing gear assembly is in a raised configuration), and/or transition between the first position and the second position. The conduit may be configured to discharge the cooled air flow into the volume when the brake system is in the first position, when the brake system is in the second position, and/or when the brake system transitions between the first position and the second position. Hence, the cooling system and devices may be configured to deliver the cooled air flow to the brake system both when the aircraft is grounded (e.g., following and/or during a landing) and when the aircraft is in flight (e.g., following a takeoff).

In examples, the conduit receives the cooled air flow from an ECS configured to supply the cooled air flow to compartments of the aircraft, such as a passenger cabin, a flight deck, a cargo hold, a galley, a lavatory, and/or other compartments of the aircraft. For example, the ECS may be configured to receive an air flow from a bleed system of an aircraft, an auxiliary power unit (APU) of the aircraft, or some other system of the aircraft. One or more air conditioning packs of the ECS may be configured to receive some portion of the air flow and reduce a temperature to the air flow to produce the cooled air flow. The ECS may be configured to distribute the cooled air flow to one or more of the compartments. In examples, the ECS is configured to substantially recirculate air among at least some of the compartments and add the cooled air flow to the recirculating flow (e.g., using a mixing manifold). For example, the ECS may include an air distribution system configured to distribute supply air including the cooled air stream to the compartments. The ECS may include an air return system (e.g., an air ventilation system) configured withdraw return air from one or more of the compartments and deliver the return air to the ECS (e.g., to the mixing manifold). The ECS may mix the return air and the cooled air flow (e.g., using the manifold) and provide the mixture as the supply air to, for example, assist in substantially establishing and/or maintaining a relative homogeneity among the atmospheres of the compartments. Hence, the supply air may be comprised of at least some portion of the cooled air flow produced by the air conditioning pack.

The conduit of the cooling system and devices may be configured to receive the cooled air flow produced by the air conditioning pack via direct or indirect fluidic coupling with one or more compartments and/or systems of the aircraft configured to receive the supply air. For example, in some examples, the conduit may receive the cooled air flow from one of more of the compartments (e.g., one or more of the cabin, flight deck, cargo holds, and/or other compartments of the vehicle). In some examples, the conduit may receive the cooled air flow from one or more portions of the ECS, such as the air distribution system, the air return system, the mixing manifold, and/or another portion of the ECS.

In some examples, the conduit includes an inlet portion defining an inlet configured to receive the cooled air flow. The conduit may include an outlet portion defining an outlet configured to discharge the cooled air flow to the volume defined by the brake system and/or the wheel. In examples, the outlet portion is configured to mechanically engage some portion of the brake system such that the outlet is positioned to discharge the cooled air flow to the volume. The outlet portion may be configured to remain mechanically engaged to the brake system when the brake system is in the first position (e.g., when the landing gear assembly is in a lowered configuration), when the brake system is in the second position (e.g., when the landing gear assembly is in a raised configuration), and when the brake system transitions between the first position and the second position (e.g., when the landing gear assembly transitions between a lowered configuration and a raised configuration). Hence, the outlet portion may mechanically engage the brake system such that cooled air flow may be provided to the brake system when a landing gear assembly is in the lowered configuration, the raised configuration, and/or transitioning between the lowered configuration and the raised configuration.

In some examples, the brake system includes a cover configured to provide protection to portions of the brake system positioned within the cavity of the wheel. For example, the cover may be configured to cover some portion of an opening defined by a rim of the wheel which opens into the cavity. In examples, the cover is an actuator cover configured to cover and/or at least partially house one or more actuators configured to compress the disc stack of the brake system. In some examples, the cover is configured to remain substantially stationary with respect to one or more portions of the brake system, such as a torque tube. In some of these examples, the outlet portion of the conduit is mechanically engaged with the cover and configured to discharge the cooled air flow into the volume defined by the brake system and/or the wheel.

In some examples, the cover is substantially at an inboard side of the wheel (e.g., closer to the inboard side than the outboard side, and/or aligned with the inboard side) when the brake system is positioned within the cavity. In some of these examples, the conduit is configured to discharge the cooled air flow through the volume substantially in a direction from the inboard side towards an outboard side of the wheel. In examples, the cooling system and devices are configured to flow the cooled air flow through the volume and subsequently exhaust the cooled air flow to an atmosphere surrounding the aircraft (e.g., via one or more accesses defined by the wheel rim).

While an aircraft is primarily referred to herein, the cooling devices, systems, and methods described herein can be used with other vehicles, including marine vehicles and/or land vehicles.

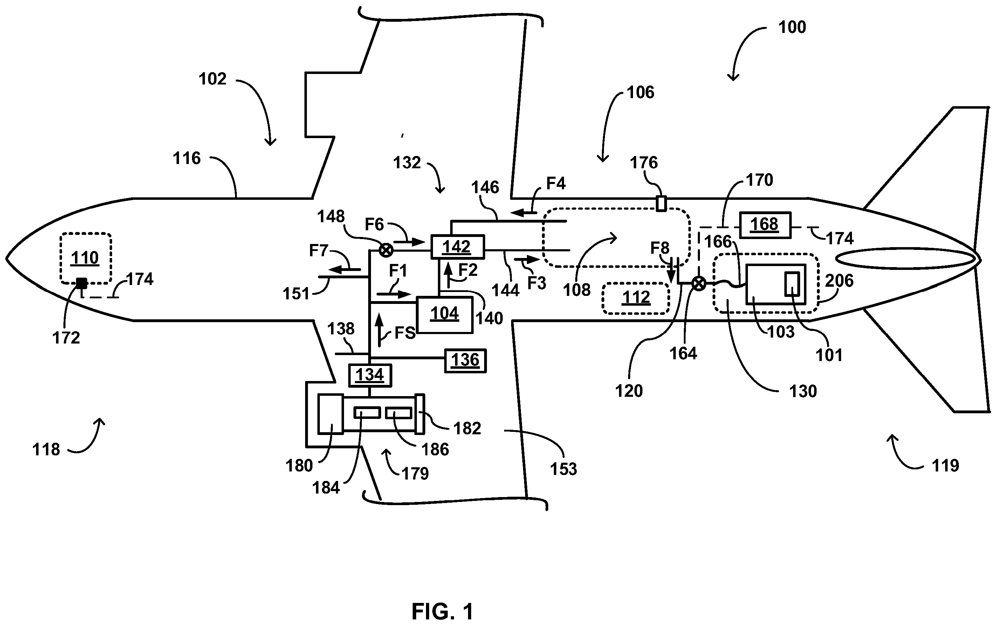

FIG. 1 schematically illustrates an example system 100 configured to provide a cooled air flow to a brake system 101 of vehicle 102. In examples, vehicle 102 (e.g., an aircraft) includes an air conditioning pack 104 and an assembly 103 (e.g., a landing gear assembly). In examples, assembly 103 supports brake system 101. Vehicle 102 includes one or more compartments 106 ("compartments 106"), such as cabin 108, flight deck 110, cargo hold 112, and/or other compartments of vehicle 102 (e.g., one or more galleys, lavatories, and/or other compartments). In examples, vehicle 102 includes a fuselage 116 extending from a forward portion 118 of vehicle 102 to an aft portion 119 of vehicle 102. Compartments 106 are supported by and/or housed within fuselage 116.

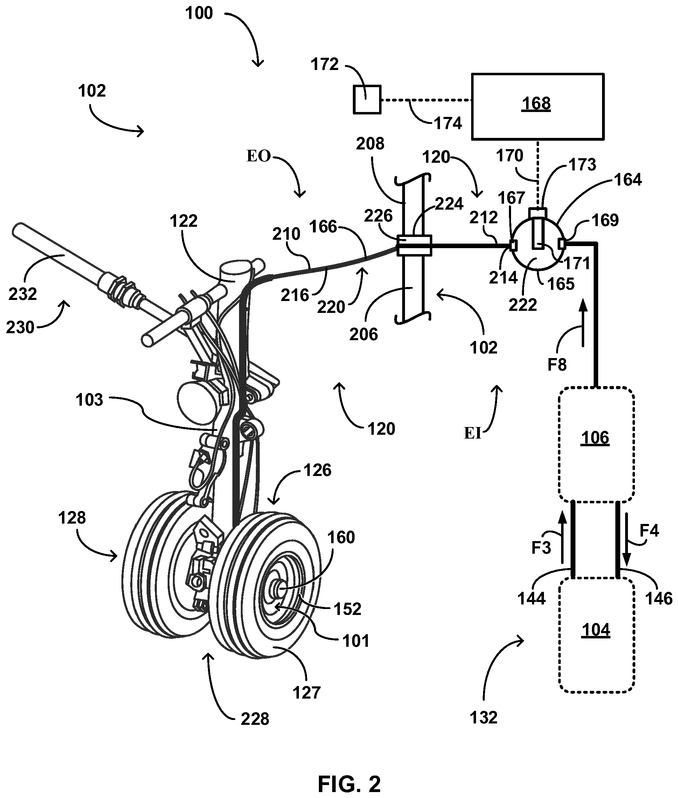

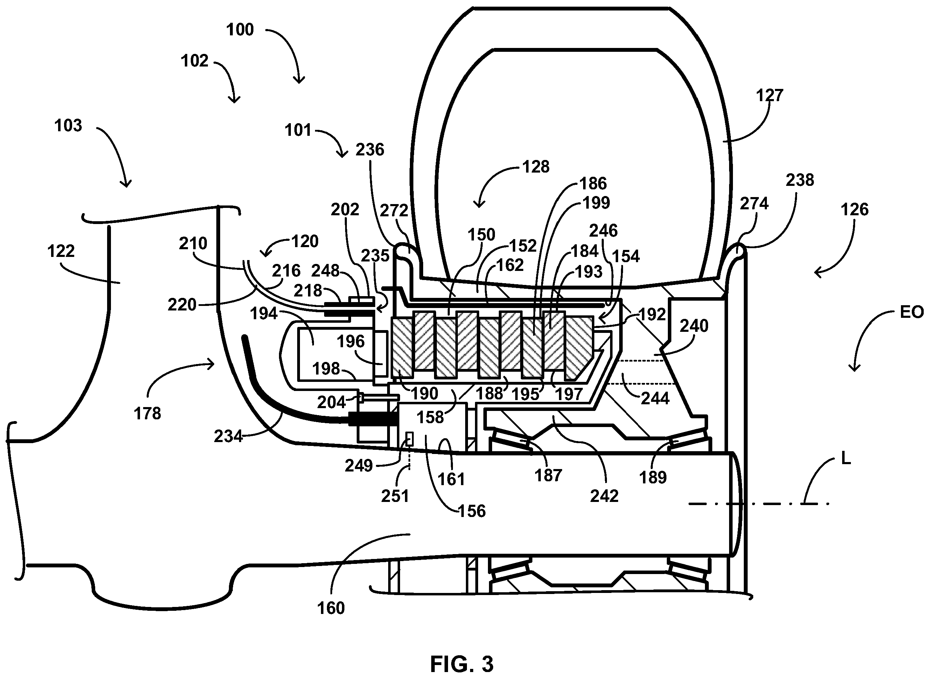

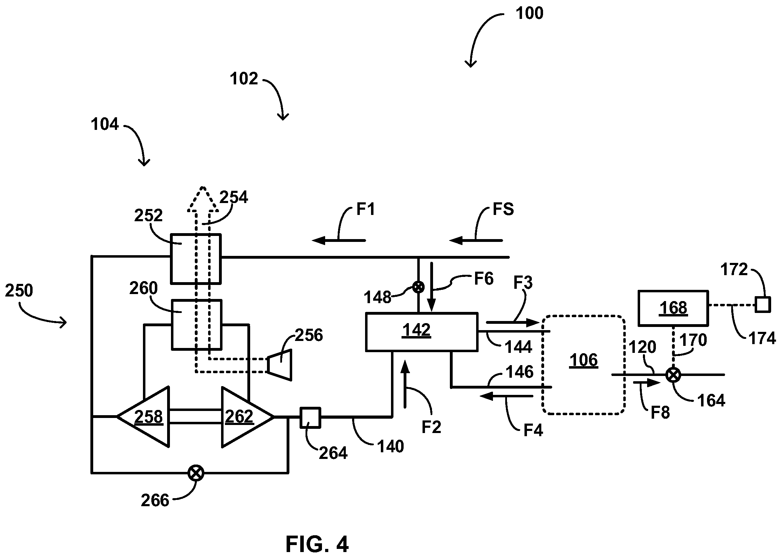

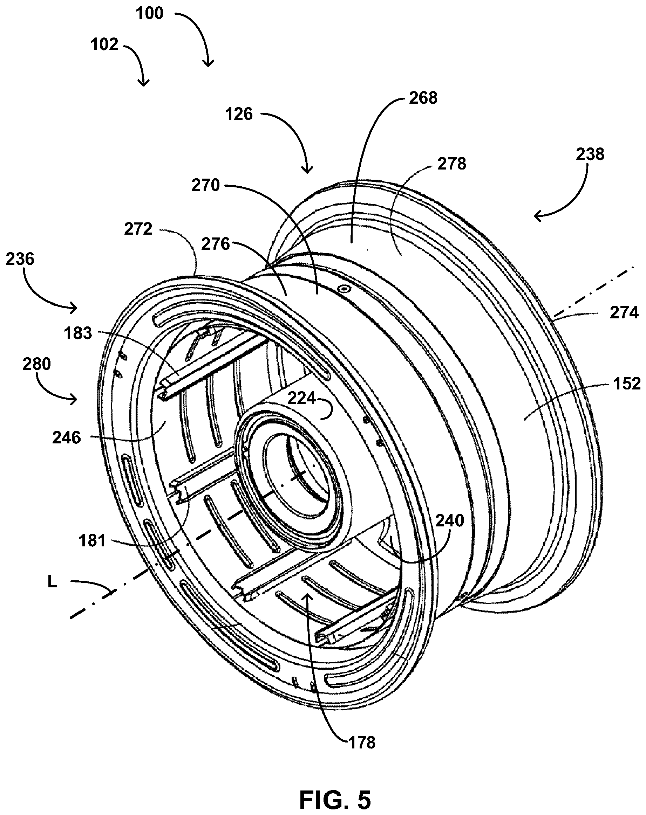

FIG. 2 schematically illustrates an example conduit 120 attached to a strut 122 of example assembly 103 and configured to deliver the cooled air flow to a volume defined at least in part by a brake system 101 and/or a wheel 126. FIG. 3 schematically illustrates brake system 101 and/or wheel 126 defining one or more volumes 128 ("volumes 128"), with wheel 126 and portions of a brake system 101 shown as cross-sections with a cutting plane parallel to the page and, e.g., through a longitudinal axis L of brake system 101. In examples, wheel 126 supports a tire 127. FIG. 4 schematically illustrates an example air conditioning pack 104 configured to provide a cooled air flow to compartments 106. FIG. 5 illustrates a perspective view illustrating an example wheel 126.

In examples, assembly 103 is configured to position relative to a bay 130 (e.g., a landing gear bay) of vehicle 102. For example, assembly 103 may be configured to establish a first orientation (e.g., a lowered configuration) relative to bay 130 and configured to establish a second orientation (e.g., a raised configuration) relative to bay 130. Assembly 103 may be configured to transition from the first orientation to the second orientation (e.g., during a takeoff of vehicle 102) and/or transition from the second orientation to the first orientation (e.g., during a landing of vehicle 102).

In the example shown in FIGS. 1-3, assembly 103 mechanically supports brake system 101. Hence, brake system 101 may establish a first position relative to fuselage 116 when assembly 103 establishes the first orientation and establish a second position relative to fuselage 116 when assembly 103 establishes the second orientation. Brake system 101 may transition between the first position and the second position when assembly 103 transitions between the first orientation and the second orientation. In examples, conduit 120 is configured to deliver the cooled air flow to volumes 128 when brake system 101 in the first position (e.g., when assembly 103 is in a lowered configuration), when assembly 103 is in the second position (e.g., when assembly 103 is in a raised configuration), and when brake system 101 transitions between the first position and the second position (e.g., when assembly 103 transitions between the lowered configuration and the raised configuration).

Vehicle 102 includes an environmental control system 132 ("ECS 132"). ECS 132 is configured to provide a cooled air flow into and throughout compartments 106 of vehicle 102. In examples, ECS 132 is configured to receive an air flow from a bleed system 134. In some examples, in addition to or instead of bleed system 134, ECS 132 is configured to receive an air flow from a power unit 136 (e.g., an auxiliary power unit (APU) or other system of vehicle 102). In some examples, ECS 132 may be configured to receive an air flow from a connection 138 (e.g., a ground connection). For example, ECS 132 may be configured to receive an air flow FS from bleed system 134, power unit 136, and/or connection 138, which are each described in further detail below.

ECS 132 includes one or more air conditioning packs such as an air conditioning pack 104 ("pack 104"). Pack 104 is configured to receive some portion of the air flow FS (e.g., flow F1) from bleed system 134, power unit 136, and/or connection 138. Pack 104 is configured to cool the air flow, e.g., using compression and expansion of the air flow (e.g., using an air cycle machine 250 (FIG. 4)). In some examples, pack 104 may be configured to cool the air flow by causing the air flow to exchange heat with a heat transfer fluid, such as a refrigerant fluid and/or another air flow (e.g., a ram air flow). Pack 104 is configured to receive the portion of the air flow (e.g., flow F1) from bleed system 134, power unit 136, and/or connection 138 and cool the air flow to provide a cooled air flow (e.g., flow F2). Pack 104 is configured to provide the cooled air flow (e.g., flow F2) to compartments 106 of vehicle 102, such as cabin 108, flight deck 110, cargo hold 112, and/or other compartments of vehicle 102. In examples, pack 104 is configured to issue the cooled air flow (e.g., flow F2) using a pack discharge 140. Pack discharge 140 may be, for example, an outlet of pack 104, a conduit fluidically coupling pack 104 and another portion of ECS 132, or another structure through which pack 104 issues the cooled air flow.

In some examples, ECS 132 is configured to substantially recirculate air among compartments 106 of vehicle 102. ECS 132 may be configured to add the cooled air flow from pack 104 to the recirculating flow. For example, ECS 132 may include one or more mixing manifolds such as a mixing manifold 142. Mixing manifold 142 may be configured to provide a supply air (e.g., flow F3) to one or more of compartments 106. Mixing manifold 142 may be configured to receive a return air (e.g., flow F4) from one or more of compartments 106. For example, mixing manifold 142 may be configured to receive a first portion of the return air from cabin 108, a second portion of the return air from flight deck 110, a third portion of the return air from cargo hold 112, and/or another portion of the return air from another of compartments 106. Mixing manifold 142 may be configured to mix the portions of the return air and provide at least a portion of the mixed return air as supply air (e.g., flow F3) to, for example, assist in substantially establishing and/or maintaining a relative homogeneity among the atmospheres in compartments 106.

In some examples, ECS 132 (e.g., pack 104) is configured to provide the cooled air flow (e.g., flow F2) to mixing manifold 142. Mixing manifold 142 may be configured to mix the cooled air flow with the first portion of the return air from cabin 108, the second portion of the return air from flight deck 110, the third portion of the return air from cargo hold 112, and/or the other portion of the return air from the other of compartments 106, such that the supply air (e.g., flow F3) comprises the mixed return air and the cooled air flow.

In some examples, ECS 132 includes an air distribution system 144 configured to distribute the supply air (e.g., from mixing manifold 142). Air distribution system 144 may include a variety of components for transporting and dispersing the supply air into compartments 106 including, but not limited to supply ducting, supply air vents, gaspers, and the like. The supply ducting, supply air vents, gaspers, and the like may be distributed throughout compartments 106. For example, a portion of the supply ducting, supply air vents, gaspers, and the like may be distributed within and/or configured to provide a first portion of the supply air to cabin 108. Another portion of the supply ducting, supply air vents, gaspers, and the like may be distributed within and/or configured to provide a second portion of the supply air to flight deck 110. An additional portion of the supply ducting, supply air vents, gaspers, and the like may be distributed within and/or configured to provide a third portion of the supply air to cargo hold 112. Others portions of the supply ducting, supply air vents, gaspers, and the like may be distributed within and/or configured to provide additional portions of the supply air to other compartments of vehicle 102.

ECS 132 may include an air return system 146 configured withdraw the return air (e.g., flow F4) from one or more of compartments 106. Air return system 146 may be configured to provide the return air to ECS 132 (e.g., mixing manifold 142). Air return system 146 may include a variety of components for withdrawing the return air from compartments 106 and returning the return air to ECS 132, including, but not limited to return ducting, return air vents, recirculation fans, and the like, which may be distributed throughout compartments 106. For example, a portion of the return ducting, return air vents, recirculation fans, and the like may be distributed within and/or configured to withdraw the first portion of the return air from cabin 108 and return the first portion to ECS 132. Another portion of the return ducting, return air vents, recirculation fans, and the like may be distributed within and/or configured to withdraw the second portion of the return air from flight deck 110 and return the second portion to ECS 132. An additional portion of the return ducting, return air vents, recirculation fans, and the like may be distributed within and/or configured to withdraw the third portion of the return air from cargo hold 112 and provide the third portion to ECS 132. Others portions of the return ducting, return air vents, recirculation fans, and the like may be distributed within and/or configured to withdraw the other portion of the return air from other compartments of compartments 106 and provide the other portion to ECS 132.

In examples, ECS 132 is configured to provide a trim air (e.g., flow F6) to mixing manifold 142 to, for example, control a temperature of the supply air (e.g., flow F3). The trim air may be a portion of air flow FS. ECS 132 may be configured such that the trim air substantially bypasses at least some portion of pack 104. Hence, the trim air may have a higher temperature than the cooled air flow provided by pack 104. ECS 132 may be configured to substantially control the temperature of the supply air by at least mixing the trim air (e.g., using mixing manifold 142) with the cooled air flow (e.g., flow F2). In examples, ECS 132 includes one or more trim valves such as trim valve 148 configured to control a flow of the trim air to mixing manifold 142. A position of trim valve 148 may be controlled by a thermostat and/or members of the flight crew to control a temperature of the supply air.

ECS 132 may include a plurality of trim valves such as trim valve 148 and a plurality of mixing manifolds such as mixing manifold 142 to enable separate temperature control of some of or each of compartments 106. For example, ECS 132 may include trim valve 148 and/or mixing manifold 142 configured to control a temperature of the first portion of supply air provided to cabin 108, include a second trim valve and/or a second mixing manifold configured to control a temperature of the second portion of the supply air to flight deck 110, and/or include a third trim valve and/or a third mixing manifold configured to control a temperature of the third portion of the supply air to cargo hold 112. ECS 132 may include any number of trim valves and/or mixing manifolds.

System 100 is configured to provide cooling to one or more components of brake system 101. System 100 includes conduit 120. In examples, system 100 is configured to discharge cooled air flow to volumes 128 to provide cooling to the one or more components of brake system 101. For example, system 100 may be configured to discharge the cooled air flow to a volume 150 (FIG. 3) defined at least partially between a wheel rim 152 of wheel 126 and a disc stack 154 of brake system 101. In addition to or instead of volume 150, in some examples, system 100 is configured to discharge the cooled air flow to a volume 156 defined at least partially between a torque tube 158 of brake system 101 and an axle assembly 160 of assembly 103. In examples, volume 150 may be defined at least partially between a heat shield 162 of wheel 126 and disc stack 154. In some examples, axle assembly 160 mechanically supports torque tube 158 and/or wheel 126.

Conduit 120 is configured to receive cooled air flow (e.g., at least some portion of flow F2) issued from pack 104. Conduit 120 may be configured to receive the cooled air flow directly or indirectly from pack 104. For example, conduit 120 may be configured to receive the cooled air flow from any portion of vehicle 102 which is configured to receive some portion of the cooled air flow (e.g., flow F2) issued by pack 104. For example, in some examples, conduit 120 may directly or indirectly receive the cooled air flow from one or more portions of ECS 132, such as air distribution system 144, air return system 146, mixing manifold 142, pack discharge 140, and/or another portion of ECS 132. In some examples, conduit 120 may directly or indirectly receive the cooled air flow from one of more of compartments 106 (e.g., one or more of cabin 108, flight deck 110, cargo hold 112, and/or other compartments of vehicle 102). In some examples, conduit 120 is configured to receive the cooled air flow from a portion of vehicle 102 configured to fluidically couple to pack discharge 140. In some examples in which conduit 120 receives the cooled air flow indirectly from pack 104, the received air may not be subject to further active cooling (e.g., by a device as opposed to incidentally) between pack 104 and conduit 120. That is, the cooled air flow is generated by pack 104 without any intervening cooling devices or systems.

As used here, when a portion of vehicle 102 fluidically couples with pack discharge 140, this may mean the portion of vehicle 102 receives at least some portion of flow F2 via a flow path defined at least partially by pack discharge 140. The flow path may extend from pack discharge 140 to the portion of vehicle 102. In some examples, the flow path extends through and/or is partially defined by other portions of vehicle 102, such as air distribution system 144, air return system 146, mixing manifold 142, other portions of ECS 132, cabin 108, flight deck 110, cargo hold 112, other compartments of vehicle 102, and/or other portions of vehicle 102. For example, when conduit 120 indirectly receives the cooled air flow from pack discharge 140 and/or pack 104, conduit 120 may receive the cooled air flow from cabin 108, flight deck 110, cargo hold 112, other compartments of vehicle 102, air distribution system 144, air return system 146, mixing manifold 142, other portions of ECS 132, and/or other portions of vehicle 102 to which pack discharge 140 and/or pack 104 supply the cooled air flow. Conduit 120 may be configured to discharge the cooled air flow (e.g., flow F8) to volumes 128 to, for example, provide cooling to one or more components of brake system 101 and/or wheel 126 supported within and/or defining volumes 128.

In examples, conduit 120 includes a flexible portion 166 configured to flex and/or bend when assembly 103 transitions between the first orientation relative to bay 130 (e.g., the lowered configuration) and the second orientation relative to bay 130 (e.g., the raised configuration). Hence, conduit 120 may be configured to provide cooling to a brake system 101 when the landing gear assembly is raised and positioned within a landing gear bay (e.g., when in the raised configuration), when the landing gear assembly is lowered and extended from the landing gear bay (e.g., when in the lowered configuration) and/or when the landing gear assembly is transitioning between the raised configuration and the lowered configuration. In some examples, at least flexible portion 166 may extend within bay 130. In some examples, for example when assembly 103 includes a landing gear assembly of an aircraft, conduit 120 (e.g., flexible portion 166) is configured to mechanically connect to strut 122 (FIG. 2) of the landing gear assembly.

In some examples, system 100 includes a valve 164 configured to control a flow rate of the cooled air flow discharged into volumes 128 from conduit 120. In examples, system 100 includes control circuitry 168 configured to control and/or adjust a position of valve 164 (e.g., via a communication link 170). System 100 may include a user input device 172 (e.g., a switch, button, touchscreen, or the like) operable by, for example, a flight crew member or maintenance member and configured to cause control circuitry 168 to control and/or adjust the position of valve 164. For example, system 100 may include user input device 172 (e.g., located in flight deck 110) via which a user can provide input, which is transmitted to control circuitry 168 (e.g., via communication link 174). In response to receiving the user input, control circuitry 168 controls and/or adjusts a position of valve 164 based on an action indicated by the user input. In some examples, control circuitry 168 may be configured to control and/or adjust a position of valve 164 based on a signal from a sensor, such as a temperature sensor (e.g., sensor 249 (FIG. 4)) positioned within and/or in proximity to brake system 101 and/or volume 150.

ECS 132 may be configured to pressurize one or more of compartments 106 (e.g., at least cabin 108, flight deck 110, cargo hold 112, and/or other compartments) using air flow FS provided by air bleed system 134, power unit 136, and/or connection 138. In examples, ECS 132 is configured to control a pressure of one or more of compartments 106 using one or more outflow valves such as outflow valve 176. Outflow valve 176 may be configured to discharge air from one or more of compartments 106 to an environment outside of vehicle 102 (e.g., an ambient environment surrounding vehicle 102) to control the pressure in compartments 106. In some examples, outflow valve 176 is a thrust recovery valve. ECS 132 may include any number of outflow valves such as outflow valve 176. Any of the outflow valves may be configured to discharge air from one or more of compartments 106 to an environment surrounding vehicle 102.

Brake system 101 (FIG. 3) is configured to generate a torque to oppose a rotation of wheel 126 around longitudinal axis L and transfer the torque to wheel 126, reducing and/or eliminating the rotation of wheel 126 around longitudinal axis L. Disc stack 154 includes one or more brake discs, such as one or more rotor discs (e.g., rotor disc 184) and/or one or more stator discs (e.g., stator disc 186). Rotor disc 184 and/or stator disc 186 may have any suitable configuration. For example, rotor disc 184 and/or stator disc 186 can each be substantially annular discs surrounding axle assembly 160.

Axle assembly 160 is configured to support wheel 126 while allowing wheel 126 to rotate about longitudinal axis L. In examples, axle assembly 160 supports wheel 126 using bearing 187 and/or bearing 189. For example, bearings 187, 189 may define a substantially circular (e.g., circular or nearly circular to the extent permitted by manufacturing tolerances) track around axle assembly 160. Torque tube 158 may be coupled to axle assembly 160 (e.g., using one or more bolts (not shown)), such that torque tube 158 remains substantially stationary when wheel 126 rotates about torque tube 158 and longitudinal axis L. Torque tube 158 may at least partially surround an exterior surface 161 of axle assembly 160 ("axle assembly exterior surface 161"). In examples, axle assembly 160 is mechanically coupled to a structure (e.g., strut 122) attached to vehicle 102.

Stator disc 186 is coupled to torque tube 158 (e.g., via a spline 188) and configured to remain rotationally stationary with respect to torque tube 158 (and axle assembly 160) as wheel 126 rotates about longitudinal axis L. Rotor disc 184 is configured to engage wheel 126 and rotate substantially synchronously with wheel 126 about longitudinal axis L, such that rotor disc 184 rotates relative to stator disc 186. For example, rotor disc 184 may be configured to engage one or more rotor drive keys of wheel 126 (e.g., rotor drive key 181, rotor drive key 183 (FIG. 5)). In examples, rotor drive key 181, 183 is configured to extend through a drive slot (not shown) on an outer perimeter 193 of rotor disc 184 ("rotor disc outer perimeter 193") to cause rotor disc 184 to rotate substantially synchronously with wheel 126. Spline 188 may be configured to extend through a spline slot (not shown) on an inner perimeter 195 of stator disc 186 ("stator disc inner perimeter 195") to cause stator disc 186 to remain rotationally stationary with respect to torque tube 158 (and axle assembly 160) as wheel 126 rotates about longitudinal axis L. Disc stack 154 may include any suitable number of rotor discs and stator discs.

In examples, stator disc inner perimeter 195 defines an annulus of stator disc 186 configured to substantially surround torque tube 158 and/or longitudinal axis L when torque tube 158 supports stator disc 186. An inner perimeter 197 of rotor disc 184 ("rotor disc inner perimeter 197") may define an annulus of rotor disc 184 configured to substantially surround torque tube 158 and/or longitudinal axis L when torque tube 158 supports rotor disc 184. In examples, stator disc 186 includes an outer perimeter 199 ("stator disc outer perimeter 199") surrounding stator disc inner perimeter 195.

Rotor disc 184 and stator disc 186 may be configured to provide opposing friction surfaces for braking vehicle 102. For example, rotor disc 184 may provide one or more friction surfaces on a face of rotor disc 184 that extends from rotor disc inner perimeter 197 to rotor disc outer perimeter 193. Stator disc 186 may provide one or more friction surfaces on a face of stator disc 186 that extends from stator disc inner perimeter 195 to stator disc outer perimeter 199. Compression of disc stack 154 (e.g., between a pressure plate 190 and a backing plate 192) may bring the opposing friction surfaces into contact, generating shearing forces between rotor disc 184 rotating substantially synchronously with wheel 126 and stator disc 186 remaining substantially stationary with respect to torque tube 158. The shearing forces may cause rotor disc 184 to impart a torque on wheel 126 (e.g., via rotor drive key 181, 183) opposing the rotation of wheel 126. The shearing forces may cause stator disc 186 to impart a torque on torque tube 158 (e.g., via spline 188) to counteract the torque imposed on wheel 126.

The shearing forces cause an increase in a temperature of rotor disc 184, stator disc 186, other rotor discs and/or stator discs of disc stack 154, and/or other components of brake system 101. System 100 is configured to mitigate the temperature rise and/or reduce an exposure to higher temperatures to, for example, mitigate oxidation of the rotor discs, stator discs, and/or other components of the brake system to prolong operational lives of the rotor discs, stator discs, and/or other components.

Brake system 101 includes an actuator 194, which is configured to compress disc stack 154 to bring the opposing friction surfaces of rotor disc 184 into contact with friction surfaces of stator disc 186. In examples, actuator 194 is configured to cause a piston 196 to translate relative to a body 198 of actuator 194 ("actuator body 198") to compress disc stack 154. Actuator 194 may cause piston 196 to translate using any suitable method. In some examples, actuator 194 is configured to cause translation of piston 196 by supplying and/or venting a pressurized hydraulic fluid to or from a piston chamber. In addition or instead, in some examples, actuator 194 is configured to cause piston 196 to translate through a motion (e.g., a rotary motion) generated by an electric motor.

Bleed system 134 (FIG. 1) may be configured to receive an air flow from an engine 179 of vehicle 102. Engine 179 may be configured to intake an intake air flow via a fan section 180 and exhaust at least a first portion of the intake air flow through an exhaust section 182 (e.g., to generate engine thrust for vehicle 102 during takeoff and flight). Engine 179 may be configured to use a second portion of the intake air flow to support combustion of a fuel and generate power (e.g., mechanical power). For example, engine 179 may be configured to compress the second portion using a compressor section 184 to generate a compressed air flow. Engine 179 may be configured to mix a portion of the compressed air flow and a fuel to cause a combustion in a combustion section 186 to generate the power. Engine 179 may be configured to transfer some portion of the generated power to fan section 180 to cause fan section 180 to continue the intake of the intake air flow. Vehicle 102 may include any number of engines such as engine 179 configured to generate engine thrust on vehicle 102.

Bleed system 134 may be configured to divert some amount of the compressed air flow from compressor section 184 (e.g., prior to the compressed air flow entering combustion section 186). In some examples, bleed system 134 is configured to extract the compressed air flow gas from multiple compressor stages of compressor section 184, such as lower pressure air from a lower pressure compressor stage and/or a higher pressure air from a higher pressure compressor stage. Bleed system 134 may be configured to provide the air flow FS to ECS 132 using the compressed air received from compressor section 184. In some examples, bleed system 134 includes a pre-cooler (not shown) configured to reduce a temperature of the compressed air flow received from compressor section 184. The pre-cooler may be configured to subsequently provide air flow FS to ECS 132. In examples, the pre-cooler is configured to cause a heat exchange between the compressed air flow received from compressor section 184 and a heat exchange fluid, such as a second air flow received by vehicle 102 via a ram air scoop (e.g., while in flight) or a second air flow driven by a fan (e.g., when grounded).

Vehicle 102 may include power unit 136 (e.g., in addition to or instead of engine 179 and/or bleed system 134). In examples, power unit 136 is an auxiliary power unit (APU). In examples, the APU is a gas turbine configured to produce and supply electric power to one or more systems and/or components of vehicle 102. In examples, the APU is configured to supply air flow FS when engine 179 is not running (e.g., when vehicle 102 is waiting at a gate) and/or when engine 179 is not producing power adequate to generate the electric power and/or air flow FS requirements of vehicle 102. In some examples, power unit 136 is located in aft portion 119 of vehicle 102.

Connection 138 (e.g., a high pressure (HP) connection and/or a low pressure (LP) connection) may be configured to receive air and/or other fluids from supply sources outside ECS 132 and/or vehicle 102 and provide the air and/or other fluids to ECS 132. In some examples, connection 138 is accessible from outside vehicle 102 and configured to receive the air and/or other fluids while vehicle 102 is grounded. For example, connection 138 may be configured to couple to one or more pieces of machinery, such as a ground cart, configured to supply the air and/or other fluids air to ECS 132 (e.g., mixing manifold 142). In some examples, connection 138 is accessible from inside vehicle 102 and configured to receive air while vehicle 102 is grounded or in flight. For example, connection 138 may be configured to couple to one or more pieces of machinery configured to supply the air and/or other fluids to ECS 132 (e.g., mixing manifold 142).

In examples, vehicle 102 is configured to provide some portion of air flow FS (e.g., a portion of air flow FS not received by ECS 132) to one or more gas loads. For example, vehicle 102 may include a supply conduit 151 configured to provide the portion of air flow FS (e.g., flow F7) to the one or more gas loads. In some examples, the one or more gas loads includes an Air Drive Unit (ADU) configured to pressurize a hydraulic system of vehicle 102 to allow, for example, the operation of flaps and other control surfaces of vehicle 102 (e.g., flaps and control surfaces on a wing 153 of vehicle 102). The one or more gas loads may include an anti-icing system (e.g., a wing anti-icing system) configured to remove and/or limit ice on an aircraft wing (e.g., wing 152) or other portion of vehicle 102. In some examples, the one or more gas loads include an inert gas generating system configured to reduce an oxygen concentration of an air flow (e.g., for subsequent use in the pressurization of a fuel tank). Vehicle 102 may be configured to provide (e.g., using supply conduit 151) the portion of air flow FS (e.g., flow F7) to other systems, devices, components, or combination thereof configured to support the operations of vehicle 102. Supply conduit 151 may comprise a single conduit or a plurality of conduits.

Conduit 120 may be configured to remain fluidically coupled to volumes 128 as brake system 101 is moved relative to vehicle 102. For example, when brake system 101 is positioned within a cavity 178 of wheel 126 (FIG. 3, FIG. 4), conduit 120 may be configured to remain fluidically coupled to volumes 128 when brake system 101 is in the first position relative to vehicle 102 (e.g., when a landing gear assembly is in a lowered configuration), when brake system 101 is in the second position relative to vehicle 102 (e.g., when the landing gear assembly is in a raised configuration), and/or when brake system 101 transitions between the first position and the second position. In some examples, conduit 120 is configured to mechanically engage some portion of brake system 101 such that conduit 120 may provide the cooled air flow to volumes 128 when brake system 101 is in the first position, in the second position, and/or transitioning between the first position and the second position.

For example, brake system 101 may include a cover 202 configured to cover at least some portion of an opening into cavity 178 (e.g., an opening defined by wheel rim 152). In some examples, cover 202 is configured to cover and/or at least partially house one or more actuators configured to compress disc stack 154, such as actuator 194. Conduit 120 may be configured to mechanically engage cover 202 such that, for example, conduit 120 remain fluidically coupled to volumes 128 when brake system 101 is in the first position relative to vehicle 102, in the second position relative to vehicle 102, and/or transitions between the first position and the second position.

In examples, cover 202 is configured to remain substantially stationary with respect to torque tube 158 and/or axle assembly 160. In examples, cover 202 is mechanically supported by and/or engaged with torque tube 158 and/or axle assembly 160. For example, cover 202 may be attached to torque tube 158 and/or axle assembly 160 by a fastener 204 configured to keep cover 202 substantially stationary relative to torque tube 158 and/or axle assembly 160. In some examples, cover 202 is configured to keep some portion of actuator 194 (e.g., actuator body 198) substantially stationary with respect to torque tube 158 and/or axle assembly 160. For example, cover 202 may be configured to keep actuator body 198 substantially stationary relative to torque tube 158 and/or axle assembly 160 when piston 196 translates relative to actuator body 198 (e.g., to compress disc stack 154).

Brake system 101 is configured to position in a first position relative to fuselage 116 (e.g., when assembly 103 is in a lowered configuration), position in a second position relative to fuselage 116 (e.g., when assembly 103 is in a raised configuration), and/or transition between the first position and the second position (e.g., when assembly 103 transitions between the lowered configuration and the raised configuration). Conduit 120 may be configured to discharge the cooled air flow into volumes 128 when brake system 101 is in the first position, when brake system 101 is in the second position, and/or when brake system 101 transitions between the first position and the second position. Hence, conduit 120 may be configured to deliver the cooled air flow to brake system 101 both when the aircraft is grounded (e.g., following and/or during a landing) and when the aircraft is in flight (e.g., following a takeoff).

As an example, FIG. 2 schematically illustrates an example conduit 120 attached to assembly 103 of vehicle 102. Conduit 120 is configured to receive the cooled air flow from a portion of vehicle 102, the portion itself also being configured to receive at least some portion of the cooled air flow. For example, conduit 120 may be configured to receive the cooled air flow (e.g., either directly or indirectly) from one or more of compartments 106 (e.g., as depicted in FIG. 2), one or more portions of ECS 132 such as air distribution system 144, air return system 146, mixing manifold 142, pack discharge 140, and/or another portion of ECS 132, and/or another portion of vehicle 102. Conduit 120 is configured to deliver the cooled air flow received to volumes 128 (FIG. 3) defined at least in part by brake system 101. In examples, assembly 103 is a landing gear assembly of vehicle 102.

In examples, assembly 103 is configured to move relative to some portion of vehicle 102. For example, assembly 103 may be configured to move relative to a bulkhead 206 (e.g., a pressure bulkhead) comprising a portion of and/or supported by fuselage 116 of vehicle 102. Bulkhead 206 may be configured to maintain an internal atmosphere EI within one or more of compartments 106 greater than or equal to an external atmosphere EO substantially external to and/or surrounding vehicle 102 (e.g., when vehicle 102 is in flight). In some examples, bulkhead 206 is a portion of a boundary 208 substantially defining bay 130 (FIG. 1). For example, when vehicle 102 is an aircraft, bay 130 may be a landing gear bay and boundary 208 may be configured to maintain internal atmosphere EI greater than or equal to external atmosphere EO within the landing gear bay.

In examples, vehicle 102 is configured to substantially maintain and/or establish internal atmosphere EI within one or more pressurized spaces of vehicle 102 (e.g., one or more of compartments 106). Vehicle 102 may be configured to substantially maintain and/or establish external atmosphere EO within one or more unpressurized spaces of vehicle 102 (e.g., bay 130) and/or substantially external to and/or surrounding vehicle 102.

In some examples, conduit 120 is configured to pass through bulkhead 206 to deliver the cooled air flow from one or more of compartments 106 to volumes 128. In examples, conduit 120 includes a conduit body 210 which includes an inlet portion 212 defining an inlet 214 ("conduit inlet 214") configured to receive the cooled air flow from compartments 106 and/or a portion of ECS 132. In examples, conduit inlet 214 may be configured to receive the cooled air flow via valve 164. In examples, inlet portion 212 is configured to position within a pressurized space of vehicle 102. Conduit body 210 may include an outlet portion 216 defining an outlet 218 ("conduit outlet 218") (FIG. 4) configured to deliver the cooled air flow to volumes 128. In examples, outlet portion 216 is configured to position within an unpressurized space of vehicle 102 (e.g., within bay 130) and/or within external environment EO. In examples, conduit body 210 defines a flow volume 220 which extends continuously from conduit inlet 214 to conduit outlet 218. For example, conduit body 210 can define a lumen that extends from conduit inlet 214 to conduit outlet 218, the lumen defining a flow path for air flow.

Although conduit inlet 214 is depicted in FIG. 2 as receiving the cooled air flow from valve 164, this is not required in all examples. In some examples, for example when valve 164 is configured to be located with an unpressurized space (e.g., bay 130), and/or when valve 164 is supported by and/or defines a portion of bulkhead 206, conduit inlet 214 may (e.g., more directly) receive the cooled air flow from one or more of compartments 106. In examples (e.g., when conduit inlet 214 receives the cooled air flow from one or more of compartments 106), flow volume 220 may include a valve flow path 222 defined by valve 164.

Conduit 120 may be configured such that flow volume 220 extends through bulkhead 206. For example, in examples, conduit 120 is configured to pass through bulkhead 206. As an example, conduit 120 may be configured to extend through an access 224 (e.g., defined by bulkhead 206) to pass through bulkhead 206. Bulkhead 206 may be configured to maintain internal atmosphere EI greater than or equal to external atmosphere EO as conduit 120 passes through bulkhead 206.

In examples, conduit 120 includes a pressure seal 226 configured to assist in maintaining internal atmosphere EI greater than or equal to external atmosphere EO as conduit 120 passes through bulkhead 206. In some examples, pressure seal 226 is configured to engage bulkhead 206 and conduit 120 as conduit 120 passes through bulkhead 206. In examples, pressure seal 226 is configured to substantially surround (e.g., fully surround or nearly fully surround) an external perimeter defined by conduit 120 when pressure seal 226 engages bulkhead 206 and conduit 120. Pressure seal 226 may be configured to extend between conduit 120 and bulkhead 206 to, for example, substantially fill and/or block (e.g., fill or block to the extent permitted by manufacturing tolerances) any gaps and/or passages between internal atmosphere EI and external atmosphere EO which might otherwise be present in the absence of pressure seal 226. In examples, pressure seal 226 is positioned between and separates inlet portion 212 and outlet portion 216. Pressure seal 226 may be, for example, a fairlead, a stuffing tube, a packing, or some other type of pressure seal.

In some examples, assembly 103 is configured to establish a first orientation (e.g., a lowered configuration) relative to bulkhead 206 and/or boundary 208 and configured to establish a second orientation (e.g., a raised configuration) relative to bulkhead 206 and/or boundary 208. Assembly 103 may be configured to transition from the first orientation to the second orientation (e.g., during a takeoff of vehicle 102) and/or transition from the second orientation to the first orientation (e.g., during a landing of vehicle 102). In examples, assembly 103 is a landing gear assembly configured to move wheel 126 and/or brake system 101 relative to bulkhead 206 and/or boundary 208 when assembly 103 transitions between the first orientation and the second orientation.

In examples, vehicle 102 is an aircraft and assembly 103 is a landing gear assembly including strut 122. In examples, strut 122 extends from fuselage 116 (e.g., a framework of fuselage 116). Strut 122 may be configured to move wheel 126 and/or brake system 101 relative to bulkhead 206 and/or boundary 208 when assembly 103 transitions between the first orientation and the second orientation. For example, portions of strut 122 may be configured to move relative to bulkhead 206 and/or boundary 208 to cause wheel 126 to move relative to bulkhead 206 and/or boundary 208.

In examples, strut 122 and/or other portions of the landing gear assembly (e.g., wheel 126, axle assembly 160, and/or a support structure 228 such as a bogie) are configured to extend from bay 130 in the first orientation (e.g., the lowered configuration). Strut 122 and/or the other portions of the landing gear assembly may be configured to substantially stow within bay 130 in the second configuration (e.g., the raised configuration). In examples, the landing gear assembly includes one or more links 230 including, for example, a sidestay link 232 configured to cause strut 122 to move wheel 126 and/or brake system 101 relative to bulkhead 206 and/or boundary 208. Strut 122 may be configured to mechanically support at least one of axial assembly 160 and/or support structure 228. In some examples, support structure 228 supports and/or defines axial assembly 160.

Conduit 120 is configured to deliver the cooled air flow to volumes 128 when assembly 103 is in the first orientation, when assembly 103 is in the second orientation, and/or when assembly 103 transitions between the first configuration and the second configuration. For example, conduit 120 may include flexible portion 166 configured to flex and/or bend when assembly 103 transitions between the first orientation relative and the second orientation. Hence, conduit 120 may be configured to provide cooling to volumes 128 when a landing gear assembly is raised and positioned within bay 130, when the landing gear assembly is lowered and extending from bay 130, and/or when the landing gear assembly is transitioning between the raised configuration and the lowered configuration. In examples, outlet portion 216 includes flexible portion 166. In examples, brake system 101 establishes the first position when assembly 103 is in the first configuration, establishes the second position when assembly 103 is in the second configuration, and/or transitions between the first position and the second position when assembly 103 transitions between the first configuration and the second configuration.

In examples, conduit 120 (e.g., outlet portion 216) is configured to establish a first conduit configuration (e.g., relative to bulkhead 206) when assembly 103 is in the first configuration and/or brake system 101 is in the first position. Conduit 120 (e.g., outlet portion 216) may be configured to establish a second conduit configuration (e.g., relative to bulkhead 206) when assembly 103 is in the second configuration and/or brake system 101 is in the second position. Conduit 120 (e.g., outlet portion 216) may be configured to transition between the first conduit configuration and the second conduit configuration when assembly 103 transitions between the first configuration and the second configuration and/or brake system 101 transitions between the first position and the second position.

At least some portion of outlet portion 216 may be configured to move relative to bulkhead 206 and/or boundary 208 when strut 122 moves relative to bulkhead 206 and/or boundary 208. In examples, some portion of outlet portion 216 may be configured to be substantially stationary relative to strut 122 (e.g., as strut 122 moves relative to bulkhead 206 and/or boundary 208, outlet portion 216 moves with strut 122). In some examples, outlet portion 216 is configured to mechanically attach to assembly 103. For example, outlet portion 216 may be configured to mechanically attach to strut 122 using a fastener, such as a clip, a screw or bolt, and/or other type of fastener. In some examples, outlet portion 216 may be configured to mechanically attach to strut 122 using adhesives, engineering fits, fusion, friction, or welding or soldering. The mechanical attachment between outlet portion 216 and strut 122 may be substantially permanent, or, alternatively, may be configured to enable separation of outlet portion 216 and strut 122, such that outlet portion 216 and strut 122 remain substantially usable upon separation.

In examples, valve 164 is configured to control a flow rate of the cooled air flow discharged into volumes 128 from conduit 120. Valve 164 may be, for example, a globe valve, poppet valve, a needle valve, a gate valve, a spool valve, or some other mechanism or combination of mechanisms configured to control a flow rate through a valve body 165 of valve 164 and/or the flow path defined by conduit body 210. In examples, valve body 165 defines a valve inlet 167 and a valve outlet 169. Valve body 165 may be configured to define valve flow path 222 to allow a fluid (e.g., the cooled air flow) to flow from valve inlet 167 to valve outlet 169. In some examples, conduit 120 (e.g., conduit inlet 214 or some other portion of conduit 120) is configured to mechanically engage valve outlet 169. In some examples, conduit 120 (e.g., conduit inlet 214 or some other portion of conduit 120) is configured to directly or indirectly (e.g., via an intermediary conduit, a flange, a gasket, and/or another component) mechanically engage valve outlet 169.

In some examples, valve 164 is configured to translate a flow restricting element 171 relative to valve body 165 to control the flow rate of the cooled air flow. Flow restricting element 171 may be, for example, a disc, a globe, a poppet, a spool, or some other type of flow restricting element. Valve 164 may be configured to control a flow rate of the cooled air flow through valve flow path 222 to control the flow rate of the cooled air flow through the flow path defined by conduit body 210.

In examples, valve 164 is configured to control the flow rate of the cooled air flow (e.g., through valve flow path 222) based on a position of flow restricting element 171 relative to valve body 165. For example, valve 164 may be configured to position flow restricting element 171 in a shut position to substantially cease the cooled air flow through valve body 165 (e.g., prevent all cooled air flow or nearly all air flow to the extent permitted by manufacturing tolerances) and, in examples, thereby cease the cooled air flow through conduit 120. Valve 164 may be configured to position flow restricting element 171 in one or more open positions (e.g., one open position or multiple different open positions) to allow the cooled air flow through valve body 165 and, in examples, thereby allow cooled air flow through conduit 120. In examples in which valve 164 is configured to position flow restricting element 171 in multiple open positions, each open position can correspond to a different flow rate through valve 164. Valve 164 may control the flow rate of the cooled air flow using the shut position and the one or more open positions. In examples, valve 164 is configured to alter the flow rate of the cooled air flow through conduit 120 by altering a position of the flow restricting element 171 relative to valve body 165.

In examples, valve 164 includes an actuator 173 configured to cause flow restricting element 171 to translate relative to valve body 165. Actuator 173 may be any type of actuator sufficient to cause flow restricting element 171 to translate relative to valve body 165. Actuator 173 may be configured to position and/or alter a position of valve 164 based on a control signal received via communication link 170. In some examples, actuator 173 comprises a solenoid actuator configured to influence the position of valve 164 in response to a received electrical or electronic communication (e.g., received via communication link 170) In some examples, actuator 173 may be configured to position and/or alter a position of valve 164 based on a supply of a control fluid. For example, valve 164 may be a hydraulically or pneumatically operated valve. Valve 164 may include control circuitry configured to control components of valve 164 in response to a received control signal. The control circuitry may be some portion of control circuitry 168 or may be separate from control circuitry 168. In examples, valve 164 is configured to provide communications to control circuitry 168 and/or other devices in data communication with control circuitry 168.

FIG. 3 illustrates an example assembly 103 including strut 122 and axle assembly 160 supporting wheel 126. In some examples, brake system 101 is positioned within wheel 126 (e.g., within cavity 178 defined by wheel 126). Wheel 126 is configured to rotate about longitudinal axis L defined by wheel 126. In examples, longitudinal axis L extends through at least some portion of and/or a volume defined by axle assembly 160 and/or brake system 101. In FIG. 3, tire 127, portions of brake system 101, and conduit 120 are illustrated as cross-sections with a cutting plane taken parallel to longitudinal axis L.

Conduit outlet 218 is configured to deliver cooled air flow to volumes 128 of brake system 101. In examples, conduit outlet 218 is configured to discharge the cooled air flow using an opening 235 ("outlet opening 235"). Conduit 120 may be configured to engage (mechanically engage) some portion of brake system 101 such that outlet opening 235 discharges the cooled air flow (e.g., flow F8 (FIG. 1)) from outlet opening 235 into and/or toward volumes 128 (e.g., volume 150 and/or volume 156). Outlet opening 235 opens into flow volume 220 (e.g., a lumen) defined by conduit body 210. Flow volume 220 may be configured to configured to receive the cooled air flow via conduit inlet 214 (FIG. 2) and cause the cooled air flow to discharge from outlet opening 235 into and/or toward volumes 128.

Conduit 120 may be configured to deliver the cooled air flow to volume 150, volume 156, and/or another volume defined by brake system 101 and/or wheel 126 to cool one or more components of brake system 101. Conduit 120 may be configured to discharge the cool air flow generally toward and/or into any volume of volumes 128. For example, although FIG. 3 depicts conduit 120 configured to discharge the cooled air flow generally toward and/or into volume 150, in some examples, system 100 includes a conduit 234 (e.g., instead of or in addition to conduit 120) configured to discharge the cooled air flow toward and/or into volume 156 or another of volumes 128.

In examples, conduit 120, 234 is configured to discharge the cooled air flow to cause the cooled air flow to flow substantially through cavity 178 of wheel 126. In examples, cavity 178 extends at least partially from an inboard side 236 of wheel 126 to an outboard side 238 of wheel 126. Wheel 126 may be configured such that inboard side 236 is substantially between a portion of assembly 103 (e.g., strut 122) and outboard side 238 when axle assembly 160 supports wheel 126. In examples, inboard side 236 faces toward strut 122 and outboard side 238 faces away from strut 122 when axle assembly 160 supports wheel 126. In some examples, conduit 120, 234 is configured to discharge the cooled air flow to cause the cooled air flow to flow through volumes 128 substantially in a direction from inboard side 236 toward outboard side 238.

In some examples, conduit 120, 234 is configured to cause the cooled air flow to flow through volumes 128 and exit through one or more passages fluidically coupling inboard side 236 and/or cavity 178 with outboard side 238. For example, wheel 126 may include a wall and/or disc 240 ("wheel wall 240") extending between (e.g., mechanically coupling) wheel rim 152 and a hub 242 surrounded by wheel rim 152. Wheel wall 240 may define a passage 244 fluidically coupling inboard side 236 and/or cavity 178 and outboard side 238. In examples, passage 244 extends through wheel wall 240. Brake system 101 may define one or more flow paths through which the cooled air flow exits outlet opening 235 and subsequently (e.g. after flowing through volumes 128) discharges to outboard side 238 via passage 244. Instead of or in addition to passage 244, brake system 101 may be configured to define other flow paths through which the cooled air flow may exit outlet opening 235 and subsequently (e.g. after flowing through volumes 128) discharge to outboard side 238 (e.g., to external environment EO).

In other examples, conduit 120, 234 may be configured to cause the cooled air flow to flow through volumes 128 and exit cavity 178 to inboard side 236. For example, conduit 120, 234 may discharge the cooled air flow (e.g., from inboard side 236) in a direction from inboard side 236 to outboard side 238. Brake system 101 may be configured such that the cooled air flow exits outlet opening 235, flows through volumes 128, and subsequently discharges from cavity 178 (e.g., to external environment EO) in a direction substantially from outboard side 238 toward inboard side 236. Brake system 101 may be configured to define one or more flow paths through which the cooled air flow exits outlet opening 235 and subsequently (e.g. after flowing through volumes 128) discharges via inboard side 236.

In examples, brake system 101 and/or wheel 126 defines volume 150 between an inner surface 246 of wheel rim 152 ("rim inner surface 246") and disc stack 154. For example, brake system 101 and/or wheel 126 may define volume 150 between heat shield 162 and disc stack 154. In examples, wheel 126 is configured to position heat shield 162 between disc stack 154 and rim inner surface 246 to, for example, limit and/or mitigate a heat transfer from brake system 101 (e.g., from rotor disc 184, stator disc 186, and/or another component of brake system 101) to wheel rim 152 and/or other components of wheel 126 (e.g., tire 127).

In some examples, conduit 120, 234 is configured to cause the cooled air flow to discharge via conduit outlet 218 (e.g., outlet opening 235) and flow through volume 150. Volume 150 may be configured to cause the cooled air flow to contact some portion of disc stack 154, wheel rim 152 (e.g., rim inner surface 246), and/or heat shield 162 as the cooled air flow flows through volume 150. For example, volume 150 may be configured to cause the cooled air flow to contact rotor disc outer perimeter 193 and/or stator disc outer perimeter 199 as the cooled air flow exits outlet opening 235 and flows through volume 150. Volume 150 may be configured to cause the cooled air flow to contact one or more friction surfaces of rotor disc 184 and/or stator disc 186 (e.g., via a gap (not shown) separating rotor disc 184 and stator disc 186), and/or contact rotor disc inner perimeter 197 and/or stator disc inner perimeter 195 as the cooled air flow exits outlet opening 235 and flows through volume 150. Volume 150 may be configured to cause the cooled air flow to contact rim inner surface 246 and/or heat shield 162 as the cooled air flow exits outlet opening 235 and flows through volume 150.

Contact between the cooled air flow and rotor disc 184, stator disc 186, rim inner surface 246, heat shield 162, and/or other component of brake system 101 may cause a heat transfer from rotor disc 184, stator disc 186, rim inner surface 246, heat shield 162, and/or the other component, respectively, to the cooled air flow, reducing a temperature of the respective one of more of rotor disc 184, stator disc 186, rim inner surface 246, heat shield 162, and/or other component. Brake system 101 may be configured to cause the cooled air flow to discharge via outboard side 238 and/or inboard side 236 subsequent to the heat transfer, such that the cooled air flow acts to remove the heat transferred to external environment EO outside cavity 178 (e.g., an environment surrounding wheel 126). The temperature reduction of rotor disc 184, stator disc 186, rim inner surface 246, heat shield 162, and/or other component may reduce the time that the respective one or more of rotor disc 184, stator disc 186, rim inner surface 246, heat shield 162, and/or other component are exposed to higher temperatures, prolonging an operational life of the respective one or more of rotor disc 184, stator disc 186, rim inner surface 246, heat shield 162, and/or the other component. Volume 150 may be configured to cause the cooled air flow to contact other rotor discs and stator discs of disc stack 154 and/or other components of brake system 101 and/or wheel 126 as the cooled air flow exits outlet opening 235 and flows through volume 150.

In some examples, conduit 120, 234 is configured to cause the cooled air flow to flow through a volume defined at least partially by brake system 101 to remove heat and/or lower a temperature within cavity 178. For example, instead of or in addition to contacting rotor disc 184 and/or stator disc 186, conduit 120, 234 may be configured to cause contact between the cooled air flow and another component of brake system 101 ("brake system component") and/or a component of axle assembly 160 ("axle assembly component"). The contact between the cooled air flow and the brake system component and/or axle assembly component may cause a heat transfer from the brake system component and/or axle assembly component to the cooled air flow, reducing a temperature of the brake system component and/or axle assembly component.

Brake system 101 may be configured to cause the cooled air flow to discharge via outboard side 238 and/or inboard side 236 subsequent to the heat transfer from the brake system component and/or axle assembly component, such that the cooled air flow acts to remove the heat transferred from the brake system component and/or axle assembly to external environment EO. The removal of the heat transferred from the brake system component and/or axle assembly component may cause a reduction in a temperature within cavity 178, which may increase a cooling rate of rotor disc 184 and/or stator disc 186. The increased cooling rate of rotor disc 184 and/or stator disc 186 may reduce the time that rotor disc 184 and/or stator disc 186 are exposed to higher temperatures, prolonging an operational life of rotor disc 184 and/or stator disc 186.

As an example, brake system 101 may at least partially define volume 156 using torque tube 158. In examples, brake system 101 at least partially defines volume 156 substantially between torque tube 158 and axle assembly exterior surface 161. Conduit 120, 234 may be configured to cause the cooled air flow to remove heat from volume 156 as the cooled air flow flows through volume 156. In examples, conduit 120, 234 may be configured to cause the cooled air flow to contact a brake system component (e.g., torque tube 158) and/or an axle assembly component (e.g., axle assembly exterior surface 161) as the cooled air flow flows through volume 156. The removal of heat from volume 156 may cause a reduction in a temperature within cavity 178, which may increase a cooling rate of rotor disc 184 and/or stator disc 186.

In some examples, system 100 includes a plurality of conduits (e.g., conduit 120, conduit 234, and/or other conduits) configured to deliver a portion of the cooled air flow to one or more of volumes 128. Each conduit may include a conduit body configured similarly to conduit body 210 and defining an outlet portion configured similarly to outlet portion 216. Each outlet portion may be configured to define an outlet and an outlet opening configured similarly to conduit outlet 218 and outlet opening 235. Each conduit body may define a flow volume similar to flow volume 220 extending from its respective outlet opening. In some examples, each conduit body defines an inlet portion configured similarly to inlet portion 212, and defines a flow volume extending from its outlet opening to its inlet portion. In some examples, an inlet portion may be configured to provide the cooled air flow to a plurality of outlet portions, such that, for example, each flow volume defined within the plurality extends from a separate conduit outlet and through the inlet portion. For example, system 100 may include a splitter or other fitting configured to fluidically couple the inlet portion to each outlet portion in the plurality of outlet portions, such that each flow volume defined within the plurality extends from a separate conduit outlet and through the inlet portion.

Conduit outlet 218 is configured to remain substantially stationary relative to some portion of brake system 101. In an example being not according to the claims, this portion of brake system may be the torque tube 158 (e,g., to help ensure cooling is properly directed to volumes 128). Brake system 101 is configured to hold conduit outlet 218 substantially stationary relative to the portion of brake system 101. According to the claims, cover 202 is configured to hold conduit outlet 218 substantially stationary relative to the portion of brake system 101. According to the claims, cover 202 is configured to be mechanically engaged with conduit outlet 218 to hold conduit outlet 218 substantially stationary relative to the portion of brake system 101. In some examples, conduit outlet 218 is configured to remain substantially stationary with respect to cover 202 (e.g., due to mechanical engagement of cover 202 and conduit outlet 218). In some examples, conduit outlet 218 may be configured to mechanically attach to cover 202 using adhesives, engineering fits, fusion, friction, welding, soldering, and/or other attachment methods. The mechanical attachment between conduit outlet 218 and cover 202 may be substantially permanent, or, alternatively, may be configured to enable separation of conduit outlet 218 and cover 202, such that conduit outlet 218 and cover 202 remain substantially usable upon separation.

In examples, cover 202 defines a passage 248 ("cover passage 248") configured to receive some portion of conduit outlet 218. For example, cover passage 248 may be configured to allow some portion of conduit outlet 218 to insert into cover passage 248. In some examples, cover 202 may be configured such that cover passage 248 is fluidically coupled to outlet opening 235. For example, cover passage 248 may be configured to receive the cooled air flow from outlet opening 235 and direct the cooled air flow towards volumes 128. In some examples, other components of brake system 101 (e.g., other components besides cover 202) and/or axle assembly 160 may be configured to cause (e.g., by mechanical engagement) conduit outlet 218 to remain substantially stationary relative to the portion of brake system 101, such as torque tube 158.

In some examples, system 100 includes a sensor 249 configured to sense a temperature indicative of a temperature within volumes 128 and/or a temperature of a components of brake system 101. Sensor 249 may be positioned to sense the indicative temperature at any suitable location. For example, in some examples, sensor 249 may be positioned within volume 150, volume 156, or another volume defined at least in part by brake system 101 and/or wheel 126. In some examples, sensor 249 may be configured to sense a temperature of a component of brake system 101 and/or wheel 126 (e.g., a temperature of rotor disc 184 and/or a temperature of stator disc 186) in thermal communication with volumes 128. For example, sensor 249 may be positioned in one of volumes 128 or substantially within a component of brake system 101 and/or wheel 126. Sensor 249 may be configured to communicate a signal indicative of the temperature to control circuitry 168 (e.g., using a communication link 251). In some examples, control circuitry 168 is configured to control and/or adjust a position of valve 164 (to control a flow of cooled air into volume 128) based on the signal communicated by sensor 249.

FIG. 4 schematically illustrates an example air conditioning pack 104. In some examples, pack 104 includes an air cycle machine 250 configured to produce the cooled air flow (e.g., flow F2). Air cycle machine 250 may be configured to receive a portion of air flow FS (e.g., flow F1) to produce the cooled air flow. In examples, air cycle machine 250 includes a primary heat exchanger 252 configured to exchange heat with flow F1 to, for example, reduce a temperature of flow F1. Primary heat exchanger 252 may be configured to receive flow F1 and receive a secondary air 254. Primary heat exchanger 252 may be configured to cause a heat exchange between flow F1 and secondary air 254.

In some examples, vehicle 102 is configured to receive secondary air 254 using a secondary air inlet 256 (e.g., a ram-air inlet). Secondary air inlet 256 may be configured to substantially face an airflow caused by movement of vehicle 102 in a direction extending from aft portion 119 (FIG.1 ) toward forward portion 118. Secondary air inlet 256 may be configured to pressurize secondary air 254 (e.g., using ram pressure) to cause secondary air 254 to flow through primary heat exchanger 252. In some examples, instead of or in addition to secondary air inlet 256, vehicle 102 includes a fan (not shown) or other component configured to cause secondary air 254 to flow through primary heat exchanger 252. For example, when vehicle 102 is an aircraft, vehicle 102 may be configured to pressurize secondary air 254 using ram-pressure generated by secondary air inlet 256 when the aircraft is in motion (e.g., in flight), and configured to pressurize secondary air 254 using the fan when motion of the aircraft is insufficient to generate the ram pressure (e.g., when the aircraft is grounded).

Air cycle machine 250 may be configured to compress flow F1. For examples, air cycle machine 250 may include one or more compressors such as compressor 258 configured to compress flow F1. In examples, compressor 258 is configured to receive flow F1 from primary heat exchanger 252. Air cycle machine 250 may include a secondary heat exchanger 260 configured to cause a second heat exchange between the compressed flow F1 exiting compressor 258 and a cooling fluid, such as secondary air 254. In examples, secondary heat exchanger 260 is configured to cause the second heat exchange to reduce a temperature of the compressed flow F1. For example, secondary heat exchanger 260 may be configured to remove at least some portion of a heat of compression of the compressed flow F1 caused by compressor 258.

In examples, air cycle machine 250 is configured to expand the compressed flow F1 to produce the cooled air flow (e.g., flow F2). Air cycle machine 250 may be configured to expand the compressed flow F1 to cause a reduction (e.g., a further reduction) in a temperature of the compressed flow F1. For examples, air cycle machine 250 may include one or more turbines such as turbine 262 configured to expand the compressed flow F1 to produce an expanded flow F1. In examples, turbine 262 is configured to receive the compressed flow F1 from secondary heat exchanger 260. In examples, turbine 262 is configured to generate power (e.g., mechanical and/or electrical power) when turbine 262 expands the compressed flow F1 to produce the expanded flow F1. Air cycle machine 250 may produce the cooled air flow (e.g., flow F2) using the expanded flow F1. For example, turbine 262 may issue the expanded flow F1 to pack discharge 140. The expanded flow F1 may comprise at least a portion of the cooled air flow produced by pack 104.

Pack 104 may include additional components configured to condition flow F1 enroute to producing the cooled air flow, such as component 264. Component 264 may be, for example, a component configured to remove moisture from (e.g., dehumidify) the flow F1 and/or otherwise condition flow F1 enroute to producing the cooled air flow. In examples, pack 104 (e.g., air cycle machine 250) may be configured to cause at least some portion of flow F1 to bypass compressor 258, secondary heat exchanger 260, and/or turbine 262. For example when secondary air 254 is sufficiently cool to produce the cooled air flow (e.g., when vehicle 102 is in flight), pack 104 may be configured to cause the portion of flow F1 to bypass compressor 258, secondary heat exchanger 260, and/or turbine 262 using a bypass valve 266. In examples, bypass valve 266 is configured to port the portion of flow F1 substantially from primary heat exchanger 252 substantially to pack discharge 140.

Although an example air conditioning pack 104 is described with reference to FIG. 4, in other examples, pack 104 can have other configurations.

FIG. 5 is a perspective view illustrating an example wheel 126 including a plurality of rotor drive keys such as rotor drive key 181 and rotor drive key 183 configured to rotate synchronously with rim inner surface 246 of wheel 126. In examples, rim inner surface 246 supports rotor drive key 181, 183. In some examples, wheel 126 is a part of an aircraft vehicle. In other examples, wheel 126 may be a part of any other vehicle, such as, for example, any land vehicle or other vehicle.

Wheel 126 includes wheel rim 152 defining a rim outer surface 268 opposite and rim inner surface 246. In examples, a tubewell 270 defines rim inner surface 246 and rim outer surface 268. Wheel 126 defines cavity 178, In examples, cavity 178 is bounded at least in part by rim inner surface 246 and wheel hub 224. In some examples, rim inner surface 246 may define a maximum inner diameter of cavity 178. In some examples, tire 127 (FIG. 2, FIG. 3) may be mounted on rim outer surface 268. Wheel 126 may include an inboard bead seat 272 and an outboard bead seat 274 configured to retain tire 127 on rim outer surface 268. Wheel 126 may include an inboard section 276 (e.g., including inboard bead seat 272) and defining inboard side 236. Wheel 126 may include an outboard section 278 (e.g., including outboard bead seat 274) and defining outboard side 238.

Wheel 126 includes a plurality of rotor drive keys 280 ("rotor drive keys 280") on rim inner surface 246 of wheel 126, including rotor drive key 181, 183. In some examples, each rotor drive key of rotor drive keys 280 protrudes from rim inner surface 246 and extends in a substantially axial direction of wheel 126 (e.g., in a direction substantially parallel to longitudinal axis L). Rotor drive keys 280 and rim inner surface 246 are configured to be substantially stationary with respect to each other, such that when wheel 126 (and rim inner surface 246) rotates around longitudinal axis L, each of rotor drive keys 280 (e.g., rotor drive keys 81, 83) translates over a closed path around longitudinal axis L. Consequently, when wheel 126, rim inner surface 246, and rotor drive keys 280 are rotating around longitudinal axis L, a force on one or more of rotor drive keys 280 opposing the direction of rotation acts to slow or cease the rotation. One or more (e.g., substantially all) of rotor drive keys 280 may be configured to receive a torque from braking system 101 to reduce and/or cease a rotation of wheel 126. Rotor drive keys 280 may be integrally formed with rim inner surface 246, or may be separate from and mechanically affixed to rim inner surface 246.

Control circuitry 168 may include fixed function circuitry and/or programmable operating circuitry. In examples, control circuitry 168 includes circuitry configured to perform one or more functions of operating circuitry, such as sensing circuitry, processing circuitry, switching circuitry, communication circuitry, and/or other circuitries. Control circuitry 168, as well as other processors, operating circuitry, controllers, control circuitry, processing circuitry, and the like, described herein, may include any combination of integrated circuitry, discrete logic circuity, analog circuitry, such as one or more microprocessors, digital signal processors (DSPs), application specific integrated circuits (ASICs), or field-programmable gate arrays (FPGAs). In some examples, control circuitry 168 includes multiple components, such as any combination of one or more microprocessors, one or more DSPs, one or more ASICs, or one or more FPGAs, as well as other discrete or integrated logic circuitry, and/or analog circuitry.

Functions attributed to control circuitry 168 may be embodied as software, firmware, hardware or any combination thereof. Control circuitry 168 may include, for instance, a variety of capacitors, transformers, switches, and the like configured to perform the functions of control circuitry 168. In examples, control circuitry 168 may be configured to communicate with another device, such as ECS 132, a cabin pressure control system of vehicle 102, user input device 172, sensor 249, and/or other system and/or components of vehicle 102. Control circuitry 168 may include any suitable hardware, firmware, software or any combination thereof for communicating with another device. In addition, control circuitry 168 may communicate with a networked computing device and a computer network.

System 100 (e.g., control circuitry 168) can also include memory configured to store program instructions, such as software, which may include one or more program modules, which are executable by control circuitry 168. The program instructions may be embodied in software and/or firmware. The memory can include any volatile, non-volatile, magnetic, optical, or electrical media, such as a random access memory (RAM), read-only memory (ROM), non-volatile RAM (NVRAM), electrically-erasable programmable ROM (EEPROM), ferroelectric RAM (FRAM), flash memory, or any other digital media. In some examples, the memory includes computer-readable instructions that, when executed by control circuitry 168 cause control circuitry 168 to perform various functions described herein and/or other functions of control circuitry 168.

User input device 172 may have any suitable configuration. For example, user input device 172 can include a switch (e.g., a mechanical switch), a button or keypad, a speaker configured to receive voice commands from a user, a display, such as a liquid crystal (LCD), light-emitting diode (LED), or organic light-emitting diode (OLED). In some examples, user input device 172 may include a touch screen. User input device 172 may be configured to receive a user input. The user input may cause control circuitry 168 to cause valve 164 to establish and/or maintain one or more positions, such as a shut position or one of one or more open positions. The user input may cause control circuitry 168 to cause valve 164 to alter its position from a first position to a second position. In some examples, user input device 172 is also configured to display information, such as one or more indications providing information on the actuation of system 100. User input device 172 may be configured to receive inputs indicative of a position of valve 164, a desired activation of the cooling (e.g., delivered via conduit 120, 234), a desired cooling rate, or any other suitable input that corresponds to a cooling rate and/or the cooling provided by system 100 (e.g., via conduit 120, 234).

Communication links 170, 174, 251 may be hard-line and/or wireless communications links. In some examples, communication links 170, 174, 251 may comprise some portion of control circuitry 168. In some examples, communication links 170, 174, 251 comprise a wired connection, a wireless Internet connection, a direct wireless connection such as wireless LAN, Bluetooth^{™}, Wi-Fi^{™}, and/or an infrared connection. Communication links 170, 174, 251 may utilize any wireless or remote communication protocol.

Wheel 126 (e.g., wheel rim 152) may be finish machined from a near-net-shaped aluminum forging and contain an axle assembly 160 and/or wheel rim 152 for assembly of brake system 101 onto wheel 126. In other examples, wheel 126 may be manufactured in a different manner. In yet other examples, wheel 126 may be obtained rather than manufactured. Wheel 126 may be made of any suitable material. In some examples, wheel 126 includes a metal or a metal alloy. For example, wheel 126 may include aluminum, a nickel alloy, a steel alloy (e.g., stainless steel), titanium, a carboncomposite material, or magnesium.

Brake discs described herein, including stator disc 186 and rotor disc 184, may be manufactured from any suitable material. In some examples, the brake discs described herein may be manufactured from a metal or a metal alloy, such as a steel alloy. In some examples, the brake discs may be manufactured from a carbon-carbon composite material. In some examples, the brake discs may be manufactured using a carbon-carbon composite material having a high thermal stability, a high wear resistance, and/or stable friction properties. The brake discs may include a carbon material with a plurality of carbon fibers and densifying material. The carbon fibers may be arranged in a woven or non-woven configuration as either a single layer or multilayer structure.

As used here, when a first portion of a system (e.g., system 100) is substantially parallel to a second portion of or an axis defined by the system, this may mean the first portion is parallel or nearly parallel to the second portion or the axis to the extent permitted by manufacturing tolerances. In some examples, when the first portion is substantially parallel to the second portion or the axis, this may mean a first vector defined by the first component of the system defines an angle of less than 10 degrees, in some examples less than 5 degrees, and in some examples less than 1 degree, with a second vector defined by the second component or the axis.

As used here, when a first portion of a system (e.g., system 100) supports a second portion of the system, this means that when the second portion causes a first force to be exerted on the first portion, the first portion causes a second force to be exerted on the second portion in response to the first force. The first force and/or second force may be a contact force and/or an action-at-a-distance force. For example, first force and/or second force may be mechanical force, a magnetic force, a gravitational force, or some other type of force. The first portion of the system may be a portion of the system or a portion of a component of the system. The second portion of the system may be another portion of the system or another portion of the same component or a different component. In some examples, when the first portion of the system supports the second portion of the system, this may mean the second portion is mechanically supported by and/or mechanically connected to the first portion.

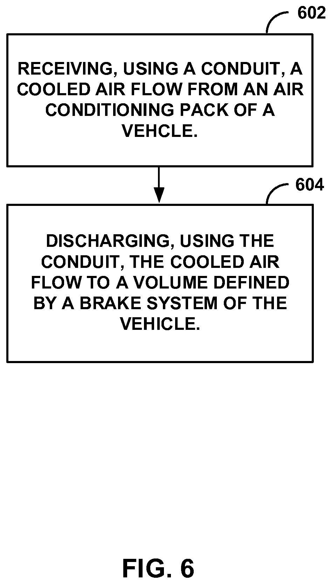

FIG. 6 is a flow diagram illustrating an example technique for providing cooling to a volume defined by a brake system 101. While the technique is described with reference to system 100 described herein, the technique may be used with other components and/or systems in other examples.

The technique includes receiving, using a conduit 120, 234, a cooled air flow from a pack 104 of a vehicle 102 (602). In examples, conduit 120, 234 is mechanically connected to an assembly 103 of vehicle 102. In examples, vehicle 102 is an aircraft. Assembly 103 may be a landing gear assembly supporting a wheel 126. In some examples, conduit 120, 234 is mechanically connected to a strut 122 of the landing gear assembly. In some examples, some portion of conduit 120, 234 (e.g., conduit outlet 218) is configured to remain substantially stationary relative to some portion of a brake system 101 supported by assembly 103.

Conduit 120, 234 may receive the cooled air flow from a pack 104 of vehicle 102 (e.g., either directly or indirectly). For example, conduit 120, 234 may receive the cooled air flow from an air cycle machine 250 of pack 104. As another example, conduit 120, 234 may receive the cooled air flow from a portion of vehicle 102 which receives the cooled air flow from pack 104. For example, conduit 120, 234 may receive the cooled air flow from one or more portions of an ECS 132, such as an air distribution system 144, an air return system 146, a mixing manifold 142, a pack discharge 140, and/or another portion of ECS 132. In some examples, conduit 120, 234 receives the cooled air flow from one of more of compartments 106 (e.g., one or more of a cabin 108, a flight deck 110, a cargo hold 112, and/or other compartments of vehicle 102). In examples, conduit 120, 234 receives the cooled air flow from any portion of vehicle 102 configured to fluidically couple to pack discharge 140.

Conduit 120, 234 discharges the cooled air flow to volumes 128 defined by a brake system 101 supported by assembly 103 (604). In examples, conduit 120, 234 delivers the cooled air flow to volumes 128 when assembly 103 (e.g., a landing gear assembly) is in a first orientation (e.g., a raised configuration) relative to a portion of vehicle 102 (e.g., bay 130). Conduit 120, 234 may deliver the cooled air flow to volumes 128 when assembly 103 is in a second orientation (e.g., a raised configuration) relative to the portion of vehicle 102. In some examples, conduit 120, 234 delivers the cooled air flow to volumes 128 when assembly 103 transitions between the first configuration and the second configuration. In examples, a flexible portion 166 of conduit 120, 234 moves relative to the portion of vehicle 102 when assembly 103 transitions between the first orientation relative and the second orientation.

In examples, conduit 120, 234 discharges the cooled air flow to remove heat generated by brake system 101 (e.g., heat resulting from a braking operation). Conduit 120, 234 may discharge the cooled air flow to volumes 128 to limit and/or mitigate a temperature increase of volumes 128 and/or a component of brake system 101 (e.g., a rotor disc 184 and/or a stator disc 186). In an example, conduit 120, 234 discharges the cooled air flow into a volume 150 defined between a disc stack 154 of brake system 101 and a wheel rim 152 of wheel 126. In an examples, conduit 120, 234 discharges the cooled air flow into a volume 156 defined between a torque tube 158 and axle assembly 160. Conduit 120, 234 discharges the cooled air flow into another volume defined at least partially by brake system 101 in other examples.

In examples, conduit 120, 234 discharges the cooled air flow to volumes 128 when brake system 101 is in a first position relative to a fuselage 116 of vehicle 102 (e.g., when assembly 103 establishes the first orientation), when brake system 101 is in a second position relative to fuselage 116 (e.g., when assembly 103 establishes the second orientation), and/or when brake system 101 transitions between the first position and the second position (e.g., when assembly 103 transitions between the first orientation and the second orientation). In examples, conduit 120, 234 discharges the cooled air flow to volumes 128 using conduit outlet 218, In examples, conduit outlet 218 is substantially stationary relative to a portion of brake system 101 (e.g., a cover 202 and/or torque tube 158) when brake system 101 transitions between the first position and the second position.

In examples, conduit 120, 234 passes through a bulkhead 206 of vehicle 102 to deliver the cooled air flow to one or more of volumes 128 defined by brake system 101. Bulkhead 206 may help separate a pressurized space of vehicle 102 from an unpressurized space of vehicle 102 and/or an external environment EO. In examples, an inlet portion 212 of conduit 120, 234 is positioned within the pressurized space and an outlet portion 216 is positioned in the unpressurized space and/or external environment EO. In examples, inlet portion 212 receives the cooled air flow (e.g., using a conduit inlet 214). Outlet portion 216 may deliver (e.g., using a conduit outlet 218) the cooled air flow to volumes 128. In examples, conduit 120, 234 delivers the cooled air flow using a flow volume 220 defined by a conduit body 210. Flow volume 220 and/or conduit body 210 may pass through bulkhead 206.

In some examples, a valve 164 controls a flow rate of the cooled air flow. In examples, control circuitry 168 controls and/or adjusts a position of valve 164 (e.g., via a communication link 170) to, for example, cause valve 164 to control the flow rate. In examples, a user input device 172 (e.g., a switch) operable by, for example, a flight crew member or maintenance member, causes control circuitry 168 to control and/or adjust the position of valve 164 (e.g., by directly specifying a valve position, a desired activation of the cooling, a desired cooling rate, or any other suitable input that corresponds to a cooling rate). User input device 172 (e.g., located in flight deck 110) may transmit a signal indicative of an input provided by a user to control circuitry 168 (e.g., via communication link 174). Control circuitry 168, in response to receiving the user input, may control and/or adjust the position of valve 164 In some examples, control circuitry 168 controls and/or adjusts the position of valve 164 based on a signal from a sensor 249. The signal may be indicative of a temperature within volumes 128.

Conduit outlet 218 may discharge the cooled air flow toward volumes 128 substantially in a direction from an inboard side 236 of wheel 126 toward an outboard side 238 of wheel 126. System 100 may flow the cooled air flow through volumes 128 (e.g., substantially in the direction from inboard side 236 to outboard side 238. In some examples, conduit outlet 218 discharges the cooled air flow toward volumes 128 substantially in a direction from outboard side 238 toward inboard side 236. In examples, system 100 exhausts the cooled air flow from volumes 128 or another portion of brake system 101 and/or wheel 126 to external atmosphere EO.

## Claims

1. An assembly (103) comprising:
a brake system (101) configured to be supported by a landing gear assembly of an aircraft and positioned within a wheel cavity (178) of a wheel (126) of the aircraft, wherein the landing gear assembly is configured to move between a first position relative to a fuselage (116) of the aircraft to a second position relative to the fuselage (116); and
a conduit (120) configured to receive a cooled air flow produced by an air conditioning pack (104) of the aircraft,
wherein the conduit (120) is configured to discharge the cooled air flow to a volume (128, 150, 156) defined by the brake system (101) when the landing gear assembly is in the first position and when the landing gear assembly is in the second position,
wherein a body of the conduit (120) defines an inlet portion (212) defining an inlet configured to receive the cooled air flow and defines an outlet portion (216) defining an outlet configured to discharge the cooled air flow to the volume (128, 150, 156),
**characterized in that**
the outlet portion (216) is configured to mechanically engage the brake system (101) when the landing gear assembly is in the first position and in the second position, and
wherein the brake system (101) comprises an actuator cover (202) and an actuator (173, 194), wherein the outlet portion (216) is configured to mechanically engage the actuator cover (202), the actuator (173, 194) being configured to compress a disc stack (154) of the brake system (101) to limit movement of the wheel (126).

2. The assembly (103) of claim 1, wherein the conduit (120) is configured to be fluidically coupled with at least one of a compartment of the aircraft, a mixing manifold (142) of the aircraft, an air distribution system (144) of the aircraft, an air return system (146) of the aircraft, or a pack discharge (140) of the air conditioning pack (104).

3. The assembly (103) of claim 1 or claim 2, further comprising:
a valve (164) configured to control a flow rate of the cooled air flow discharged by the conduit (120); and
control circuitry (168) configured to control the valve (164).

4. The assembly (103) of claim 3, further comprising a user input device (172) configured to receive an input from a user, wherein the user input device (172) is configured to provide a signal to the control circuitry (168) based on the input, and wherein the control circuitry (168) is configured to control the valve (164) based on the signal.

5. The assembly (103) of any of claims 1-4,
wherein the brake system (101) is configured to extend away from the fuselage (116) in the first position and configured to position within a bay (130) defined by the fuselage (116) in the second position.

6. The assembly (103) of any of claims 1-5, wherein the actuator cover (202) defines an actuator inlet and an actuator outlet fluidically coupled to the actuator inlet, wherein the actuator inlet is configured to receive the cooled air flow from the outlet portion (216) and the actuator outlet is configured to discharge the cooled air flow to the volume (128, 150, 156).

7. The assembly (103) of any of claims 1-6, wherein the brake system (101) includes a torque tube (158) configured to remain substantially stationary with respect to an axle assembly (160) of the aircraft when the wheel (126) rotates around the axle assembly (160), and wherein the actuator cover (202) is configured to remain substantially stationary with respect to the torque tube (158).

8. The assembly (103) of any of any of claims 1-7, further comprising a pressure seal (226) separating the inlet portion (212) and the outlet portion (216),
wherein the inlet portion (212) is configured to position within a pressurized space of the aircraft and the outlet portion (216) is configured to position within an unpressurized space,
wherein the unpressurized space is at least one of a space defined by the aircraft or a space surrounding the aircraft, and
wherein the pressure seal (226) is configured to limit a flow of fluid from the pressurized space to the unpressurized space.

9. The assembly (103) of any of claims 1-8, wherein the conduit (120) is configured to mechanically connect to a strut (122) of a landing gear of the aircraft.

10. The assembly (103) of any of claims 1-9, wherein the volume (128, 150, 156) is at least partially bounded by at least one of a torque tube (158) of the brake system (101) or one or more discs of the brake system (101).

11. The assembly (103) of any of claims 1-10, wherein the conduit (120) is configured to establish a first configuration when the landing gear assembly is in the first position and establish a second configuration when the landing gear assembly is in the second position, and wherein the conduit (120) is configured to at least one of flex or bend when the conduit (120) transitions between the first configuration and the second configuration.

12. The assembly (103) of any of claims 1-11, wherein the conduit (120) is configured to discharge the cooled air flow into the volume (128, 150, 156) in a direction from an inboard side (236) of the brake system (101) that is configured to face toward a strut (122) of the landing gear assembly to an outboard side (238) of the brake system (101) that is configured to face away from the strut (122) of the landing gear assembly when the brake system (101) is positioned within the wheel cavity (178).

13. The assembly (103) of any of claims 1-12, further comprising the air conditioning pack (104), wherein the air conditioning pack (104) is configured to cool an air flow to produce the cooled air flow, wherein the air conditioning pack (104) is configured to cool the air flow using a compressor (258) to compress the air flow and a turbine (262) to expand the air flow.

14. A method, comprising: receiving, by a conduit (120), a cooled air flow produced by an air conditioning pack (104) of an aircraft; and discharging, by the conduit (120), the cooled air flow to a volume (128, 150, 156) defined by a brake system (101) configured to be supported by a landing gear assembly of the aircraft and positioned within a wheel cavity (178) of a wheel (126) of the aircraft, wherein the landing gear assembly is configured to move between a first position relative to a fuselage (116) of the aircraft to a second position relative to the fuselage (116), and wherein the conduit (120) is configured to discharge the cooled air flow to the volume when the landing gear assembly is in the first position and when the landing gear assembly is in the second position,
wherein a body of the conduit (120) defines an inlet portion (212) defining an inlet configured to receive the cooled air flow and defines an outlet portion (216) defining an outlet configured to discharge the cooled air flow to the volume (128, 150, 156),
**characterized in that**
the outlet portion (216) is configured to mechanically engage the brake system (101) when the landing gear assembly is in the first position and in the second position, and
wherein the brake system (101) comprises an actuator cover (202) and an actuator (173, 194), wherein the outlet portion (216) is configured to mechanically engage the actuator cover (202), the actuator (173, 194) being configured to compress a disc stack (154) of the brake system (101) to limit movement of the wheel (126).

15. The method of claim 14, further comprising controlling, by control circuitry (168), a valve (164) configured to control a flow rate of the cooled air flow discharged by the conduit (120).

## Patentansprüche

1. Anordnung (103), umfassend:
ein Bremsensystem (101), das dazu konfiguriert ist, durch eine Fahrwerkanordnung eines Flugzeugs getragen zu werden, und das innerhalb eines Radhohlraums (178) eines Rads (126) des Flugzeugs positioniert ist, wobei die Fahrwerkanordnung dazu konfiguriert ist, sich zwischen einer ersten Position relativ zu einem Rumpf (116) des Flugzeugs zu einer zweiten Position relativ zu dem Rumpf (116) zu bewegen; und
eine Leitung (120), die dazu konfiguriert ist, einen gekühlten Luftstrom, der durch ein Klimaaggregat (104) des Flugzeugs hervorgebracht wird, zu empfangen,
wobei die Leitung (120) dazu konfiguriert ist, den gekühlten Luftstrom an ein Volumen (128, 150, 156), das durch das Bremsensystem (101) definiert ist, abzuleiten, wenn die Fahrwerkanordnung in der ersten Position ist und wenn die Fahrwerkanordnung in der zweiten Position ist,
wobei ein Körper der Leitung (120) einen Einlassabschnitt (212) definiert, der einen Einlass definiert, der dazu konfiguriert ist, den gekühlten Luftstrom zu empfangen, und einen Auslassabschnitt (216) definiert, der einen Auslass definiert, der dazu konfiguriert ist, den gekühlten Luftstrom an das Volumen (128, 150, 156) abzuleiten,
**gekennzeichnet dadurch, dass** der Auslassabschnitt (216) dazu konfiguriert ist, mechanisch in das Bremsensystem (101) einzugreifen, wenn die Fahrwerkanordnung in der ersten Position und in der zweiten Position ist, und
wobei das Bremsensystem (101) eine Aktuatorabdeckung (202) und einen Aktuator (173, 194) umfasst, wobei der Auslassabschnitt (216) dazu konfiguriert ist, mechanisch in die Aktuatorabdeckung (202) einzugreifen, wobei der Aktuator (173, 194) dazu konfiguriert ist, einen Scheibenstapel (154) des Bremsensystems (101) zu komprimieren, um eine Bewegung des Rads (126) zu beschränken.

2. Anordnung (103) nach Anspruch 1, wobei die Leitung (120) dazu konfiguriert ist, fluidisch mit mindestens einem von einem Abteil des Flugzeugs, einer Misch-Rohrverzweigung (142) des Flugzeugs, einem Luftverteilungssystem (144) des Flugzeugs, einem Luftrückführsystem (146) des Flugzeugs oder einer Aggregatableitung (140) des Klimaaggregats (104) gekoppelt zu werden.

3. Anordnung (103) nach Anspruch 1 oder Anspruch 2, ferner umfassend:
ein Ventil (164), das dazu konfiguriert ist, eine Strömungsrate des durch die Leitung (120) abgeleiteten gekühlten Luftstroms zu steuern; und
eine Steuerschaltung (168), die dazu konfiguriert ist, das Ventil (164) zu steuern.

4. Anordnung (103) nach Anspruch 3, ferner umfassend eine Benutzereingabevorrichtung (172), die dazu konfiguriert ist, eine Eingabe von einem Benutzer zu empfangen, wobei die Benutzereingabevorrichtung (172) dazu konfiguriert ist, ein Signal an die Steuerschaltung (168) auf Basis der Eingabe bereitzustellen, und wobei die Steuerschaltung (168) dazu konfiguriert ist, das Ventil (164) auf Basis des Signals zu steuern.

5. Anordnung (103) nach einem der Ansprüche 1 bis 4,
wobei das Bremsensystem (101) dazu konfiguriert ist, sich in der ersten Position von dem Rumpf (116) weg zu erstrecken, und dazu konfiguriert ist, sich in der zweiten Position innerhalb eines durch den Rumpf (116) definierten Zwischenraums (130) zu positionieren.

6. Anordnung (103) nach einem der Ansprüche 1 bis 5, wobei die Aktuatorabdeckung (202) einen Aktuatoreinlass und einen fluidisch mit dem Aktuatoreinlass gekoppelten Aktuatorauslass definiert, wobei der Aktuatoreinlass dazu konfiguriert ist, den gekühlten Luftstrom von dem Auslassabschnitt (216) zu empfangen, und der Aktuatorauslass dazu konfiguriert ist, den gekühlten Luftstrom an das Volumen (128, 150, 156) abzuleiten.

7. Anordnung (103) nach einem der Ansprüche 1 bis 6, wobei das Bremsensystem (101) ein Drehmomentrohr (158) beinhaltet, das dazu konfiguriert ist, in Bezug auf eine Achsenanordnung (160) des Flugzeugs im Wesentlichen ortsfest zu bleiben, wenn sich das Rad (126) um die Achsenanordnung (160) dreht, und wobei die Aktuatorabdeckung (202) dazu konfiguriert ist, in Bezug auf das Drehmomentrohr (158) im Wesentlichen ortsfest zu bleiben.

8. Anordnung (103) nach einem der Ansprüche 1 bis 7, ferner umfassend eine Druckdichtung (226), die den Einlassabschnitt (212) und den Auslassabschnitt (216) trennt,
wobei der Einlassabschnitt (212) dazu konfiguriert ist, sich innerhalb eines druckbeaufschlagten Raums des Flugzeugs zu positionieren, und der Auslassabschnitt (216) dazu konfiguriert ist, sich innerhalb eines nicht druckbeaufschlagten Raums zu positionieren,
wobei der nicht druckbeaufschlagte Raum mindestens eines von einem durch das Flugzeug definierten Raum oder einem das Flugzeug umgebenden Raum ist, und
wobei die Druckdichtung (226) dazu konfiguriert ist, einen Strom von Fluid von dem druckbeaufschlagten Raum zu dem nicht druckbeaufschlagten Raum zu beschränken.

9. Anordnung (103) nach einem der Ansprüche 1 bis 8, wobei die Leitung (120) dazu konfiguriert ist, sich mechanisch mit einer Strebe (122) eines Fahrwerks des Flugzeugs zu verbinden.

10. Anordnung (103) nach einem der Ansprüche 1 bis 9, wobei das Volumen (128, 150, 156) mindestens teilweise durch mindestens eines von einem Drehmomentrohr (158) des Bremsensystems (101) oder einer oder mehreren Scheiben des Bremsensystems (101) begrenzt ist.

11. Anordnung (103) nach einem der Ansprüche 1 bis 10, wobei die Leitung (120) dazu konfiguriert ist, eine erste Konfiguration herzustellen, wenn die Fahrwerkanordnung in der ersten Position ist, und eine zweite Konfiguration herzustellen, wenn die Fahrwerkanordnung in der zweiten Position ist, und wobei die Leitung (120) dazu konfiguriert ist, sich mindestens eines von zu verformen oder zu biegen, wenn die Leitung (120) zwischen der ersten Konfiguration und der zweiten Konfiguration wechselt.

12. Anordnung (103) nach einem der Ansprüche 1 bis 11, wobei die Leitung (120) dazu konfiguriert ist, den gekühlten Luftstrom in das Volumen (128, 150, 156) in eine Richtung von einer Innenseite (236) des Bremsensystems (101), die dazu konfiguriert ist, zu einer Strebe (122) der Fahrwerkanordnung hin gewandt zu sein, zu einer Außenseite (238) des Bremsensystems (101) abzuleiten, die dazu konfiguriert ist, von der Strebe (122) der Fahrwerkanordnung abgewandt zu sein, wenn das Bremsensystem (101) innerhalb des Radhohlraums (178) positioniert ist.

13. Anordnung (103) nach einem der Ansprüche 1 bis 12, ferner umfassend das Klimaaggregat (104), wobei das Klimaaggregat (104) dazu konfiguriert ist, einen Luftstrom zu kühlen, um den gekühlten Luftstrom hervorzubringen, wobei das Klimaaggregat (104) dazu konfiguriert ist, den Luftstrom unter Verwendung eines Kompressors (258) zum Komprimieren des Luftstroms und einer Turbine (262) zum Expandieren des Luftstroms zu kühlen.

14. Verfahren, umfassend: Empfangen, durch eine Leitung (120), eines gekühlten Luftstroms, der durch ein Klimaaggregat (104) eines Flugzeugs hervorgebracht wird; und Ableiten, durch die Leitung (120), des gekühlten Luftstroms an ein Volumen (128, 150, 156), das durch ein Bremsensystem (101) definiert ist, das dazu konfiguriert ist, durch eine Fahrwerkanordnung des Flugzeugs getragen zu werden, und das innerhalb eines Radhohlraums (178) eines Rads (126) des Flugzeugs positioniert ist, wobei die Fahrwerkanordnung dazu konfiguriert ist, sich zwischen einer ersten Position relativ zu einem Rumpf (116) des Flugzeugs zu einer zweiten Position relativ zu dem Rumpf (116) zu bewegen, und wobei die Leitung (120) dazu konfiguriert ist, den gekühlten Luftstrom an das Volumen abzuleiten, wenn die Fahrwerkanordnung in der ersten Position ist und wenn die Fahrwerkanordnung in der zweiten Position ist,
wobei ein Körper der Leitung (120) einen Einlassabschnitt (212) definiert, der einen Einlass definiert, der dazu konfiguriert ist, den gekühlten Luftstrom zu empfangen, und einen Auslassabschnitt (216) definiert, der einen Auslass definiert, der dazu konfiguriert ist, den gekühlten Luftstrom an das Volumen (128, 150, 156) abzuleiten,
**gekennzeichnet dadurch, dass** der Auslassabschnitt (216) dazu konfiguriert ist, mechanisch in das Bremsensystem (101) einzugreifen, wenn die Fahrwerkanordnung in der ersten Position und in der zweiten Position ist, und
wobei das Bremsensystem (101) eine Aktuatorabdeckung (202) und einen Aktuator (173, 194) umfasst, wobei der Auslassabschnitt (216) dazu konfiguriert ist, mechanisch in die Aktuatorabdeckung (202) einzugreifen, wobei der Aktuator (173, 194) dazu konfiguriert ist, einen Scheibenstapel (154) des Bremsensystems (101) zu komprimieren, um eine Bewegung des Rads (126) zu beschränken.

15. Verfahren nach Anspruch 14, ferner umfassend Steuern, durch eine Steuerschaltung (168), eines Ventils (164), das dazu konfiguriert ist, eine Strömungsrate des durch die Leitung (120) abgeleiteten gekühlten Luftstroms zu steuern.

## Revendications

1. Ensemble (103) comprenant :
un système de freinage (101) configuré pour être soutenu par un ensemble de train d'atterrissage d'un aéronef et positionné à l'intérieur d'une cavité de roue (178) d'une roue (126) de l'aéronef, dans lequel l'ensemble de train d'atterrissage est configuré pour se déplacer entre une première position par rapport à un fuselage (116) de l'aéronef et à une deuxième position par rapport au fuselage (116) ; et
un conduit (120) configuré pour recevoir un flux d'air refroidi produit par un groupe de conditionnement d'air (104) de l'aéronef,
dans lequel le conduit (120) est configuré pour évacuer le flux d'air refroidi vers un volume (128, 150, 156) défini par le système de freinage (101) lorsque l'ensemble de train d'atterrissage est dans la première position et lorsque l'ensemble de train d'atterrissage est dans la deuxième position,
dans lequel un corps du conduit (120) définit une partie d'entrée (212) définissant une entrée configurée pour recevoir le flux d'air refroidi et définit une partie de sortie (216) définissant une sortie configurée pour évacuer le flux d'air refroidi vers le volume (128, 150, 156),
**caractérisé en ce que** la partie de sortie (216) est configurée pour venir en prise mécanique avec le système de freinage (101) lorsque l'ensemble de train d'atterrissage est dans la première position et dans la deuxième position, et
dans lequel le système de freinage (101) comprend un couvercle d'actionneur (202) et un actionneur (173, 194), dans lequel la partie de sortie (216) est configurée pour venir en prise mécanique avec le couvercle d'actionneur (202), l'actionneur (173, 194) étant configuré pour comprimer un empilement de disques (154) du système de freinage (101) afin de limiter le mouvement de la roue (126).

2. Ensemble (103) de la revendication 1, dans lequel le conduit (120) est configuré pour être couplé fluidiquement avec au moins l'un parmi un compartiment de l'aéronef, un collecteur de mélange (142) de l'aéronef, un système de distribution d'air (144) de l'aéronef, un système de retour d'air (146) de l'aéronef, ou un refoulement de groupe (140) du groupe de conditionnement d'air (104).

3. Ensemble (103) de la revendication 1 ou de la revendication 2, comprenant en outre :
une vanne (164) configurée pour contrôler un débit du flux d'air refroidi évacué par le conduit (120) ; et
un circuit de commande (168) configuré pour contrôler la vanne (164).

4. Ensemble (103) de la revendication 3, comprenant en outre un dispositif d'entrée utilisateur (172) configuré pour recevoir une entrée provenant d'un utilisateur, dans lequel le dispositif d'entrée utilisateur (172) est configuré pour fournir un signal au circuit de commande (168) sur la base de l'entrée, et dans lequel le circuit de commande (168) est configuré pour contrôler la vanne (164) sur la base du signal.

5. Ensemble (103) de l'une quelconque des revendications 1 à 4,
dans lequel le système de freinage (101) est configuré pour s'étendre à l'écart du fuselage (116) dans la première position et configuré pour se positionner à l'intérieur d'une soute (130) définie par le fuselage (116) dans la deuxième position.

6. Ensemble (103) de l'une quelconque des revendications 1 à 5, dans lequel le couvercle d'actionneur (202) définit une entrée d'actionneur et une sortie d'actionneur couplée fluidiquement à l'entrée d'actionneur, dans lequel l'entrée d'actionneur est configurée pour recevoir le flux d'air refroidi en provenance de la partie de sortie (216) et la sortie d'actionneur est configurée pour évacuer le flux d'air refroidi vers le volume (128, 150, 156).

7. Ensemble (103) de l'une quelconque des revendications 1 à 6, dans lequel le système de freinage (101) inclut un tube de couple (158) configuré pour rester sensiblement immobile par rapport à un ensemble d'essieu (160) de l'aéronef lorsque la roue (126) tourne autour de l'ensemble d'essieu (160), et dans lequel le couvercle d'actionneur (202) est configuré pour rester sensiblement immobile par rapport au tube de couple (158).

8. Ensemble (103) de l'une quelconque des revendications 1 à 7, comprenant en outre un joint d'étanchéité de pression (226) séparant la partie d'entrée (212) et la partie de sortie (216),
dans lequel la partie d'entrée (212) est configurée pour se positionner à l'intérieur d'un espace pressurisé de l'aéronef et la partie de sortie (216) est configurée pour se positionner à l'intérieur d'un espace non pressurisé,
dans lequel l'espace non pressurisé est au moins l'un parmi un espace défini par l'aéronef ou un espace entourant l'aéronef, et
dans lequel le joint d'étanchéité de pression (226) est configuré pour limiter un flux de fluide provenant de l'espace pressurisé vers l'espace non pressurisé.

9. Ensemble (103) de l'une quelconque des revendications 1 à 8, dans lequel le conduit (120) est configuré pour se connecter mécaniquement à une jambe (122) d'un train d'atterrissage de l'aéronef.

10. Ensemble (103) de l'une quelconque des revendications 1 à 9, dans lequel le volume (128, 150, 156) est au moins partiellement délimité par au moins l'un parmi un tube de couple (158) du système de freinage (101) ou un ou plusieurs disques du système de freinage (101).

11. Ensemble (103) de l'une quelconque des revendications 1 à 10, dans lequel le conduit (120) est configuré pour établir une première configuration lorsque l'ensemble de train d'atterrissage est dans la première position et établir une deuxième configuration lorsque l'ensemble de train d'atterrissage est dans la deuxième position, et dans lequel le conduit (120) est configuré pour au moins l'un parmi fléchir ou se courber lorsque le conduit (120) passe de la première configuration à la deuxième configuration.

12. Ensemble (103) de l'une quelconque des revendications 1 à 11, dans lequel le conduit (120) est configuré pour évacuer le flux d'air refroidi dans le volume (128, 150, 156) selon une direction allant d'un côté intérieur (236) du système de freinage (101) qui est configuré pour faire face à une jambe (122) de l'ensemble de train d'atterrissage vers un côté extérieur (238) du système de freinage (101) qui est configuré pour être orienté à l'écart de la jambe (122) de l'ensemble de train d'atterrissage lorsque le système de freinage (101) est positionné à l'intérieur de la cavité de roue (178).

13. Ensemble (103) de l'une quelconque des revendications 1 à 12, comprenant en outre le groupe de conditionnement d'air (104), dans lequel le groupe de conditionnement d'air (104) est configuré pour refroidir un flux d'air afin de produire le flux d'air refroidi, dans lequel le groupe de conditionnement d'air (104) est configuré pour refroidir le flux d'air à l'aide d'un compresseur (258) pour comprimer le flux d'air et d'une turbine (262) pour détendre le flux d'air.

14. Procédé, comprenant : la réception, par un conduit (120), d'un flux d'air refroidi produit par un groupe de conditionnement d'air (104) d'un aéronef ; et l'évacuation, par le conduit (120), du flux d'air refroidi vers un volume (128, 150, 156) défini par un système de freinage (101) configuré pour être soutenu par un ensemble de train d'atterrissage de l'aéronef et positionné à l'intérieur d'une cavité de roue (178) d'une roue (126) de l'aéronef, dans lequel l'ensemble de train d'atterrissage est configuré pour se déplacer entre une première position par rapport à un fuselage (116) de l'aéronef et une deuxième position par rapport au fuselage (116), et dans lequel le conduit (120) est configuré pour évacuer le flux d'air refroidi vers le volume lorsque l'ensemble de train d'atterrissage est dans la première position et lorsque l'ensemble de train d'atterrissage est dans la deuxième position,
dans lequel un corps du conduit (120) définit une partie d'entrée (212) définissant une entrée configurée pour recevoir le flux d'air refroidi et définit une partie de sortie (216) définissant une sortie configurée pour évacuer le flux d'air refroidi vers le volume (128, 150, 156),
**caractérisé en ce que** la partie de sortie (216) est configurée pour venir en prise mécanique avec le système de freinage (101) lorsque l'ensemble de train d'atterrissage est dans la première position et dans la deuxième position, et
dans lequel le système de freinage (101) comprend un couvercle d'actionneur (202) et un actionneur (173, 194), dans lequel la partie de sortie (216) est configurée pour venir en prise mécanique avec le couvercle d'actionneur (202), l'actionneur (173, 194) étant configuré pour comprimer un empilement de disques (154) du système de freinage (101) afin de limiter le mouvement de la roue (126).

15. Procédé de la revendication 14, comprenant en outre la commande, par un circuit de commande (168), d'une vanne (164) configurée pour contrôler un débit du flux d'air refroidi évacué par le conduit (120).
